# EUROPEAN PATENT SPECIFICATION

(11) **EP 4 516 545 B1**
(45) Date of publication and mention of the grant of the patent: **13.05.2026**
(21) Application number: 24196139.0
(22) Date of filing: 23.08.2024
(51) Int. Cl.: B60J 7/02, B60J 7/043

(54) **ROOF SYSTEM FOR A VEHICLE**
DACHSYSTEM FÜR EIN FAHRZEUG
SYSTÈME DE TOIT POUR VÉHICULE

(30) Priority: 01.09.2023 EP 23194819; 12.12.2023 EP 23216048
(43) Date of publication of application: 05.03.2025
(73) Proprietor: Inalfa Roof Systems Group B.V., 5807 GW Oostrum (NL)
(72) Inventor: Nellen, Marcel Johan Christiaan, 5815 AR Merselo (NL); Geurts, Ruud, 5988 CJ Helden (NL); Welmer, Bjorn Arnoldus Franciscus, 5754 DW Deurne (NL); Jüngling, Rainer Gerhard, 41179 MÖNCHENGLADBACH (DE)
(74) Representative: De Vries & Metman

(56) References cited:
- US-A1- 2020 276 892
- US-A1- 2023 022 266
- US-B2- 8 870 276

## Description

The present invention relates to a roof system for a vehicle, the vehicle having a fixed roof and a roof opening therein. In particular, the invention relates to a roof system having a closure panel movable between a closed position and one or more opened positions.

### BACKGROUND

With the emergence of electric vehicles, the general layout of cars is changing. The space required for battery packs is commonly found at the bottom of cars, raising the ground level of the passenger compartment and in particular of the seats present therein. However, as the overall aerodynamic front face of vehicle is to be maintained, the roof is not raised resulting in a reduction of headroom. As a consequence, the height available for a roof system is reduced. To address this, car manufacturers have introduced fixed, stationary glazing panels to obtain the required reduction in what is referred to as Z-package. These stationary panels may provide a visually connecting experience with the exterior surroundings, but lack the flexibility to accommodate for different environmental circumstances, as fresh air on bright sunny mornings and cover on dark, rainy afternoons. Accordingly, there is a need to provide a roof system that can balance these conflicting requirements. Documents US 2020/276892 A1, US 2023/022266 A1 and US 8 870 276 B2 disclose examples of known roof systems.

### SUMMARY OF INVENTION

It is an object of the invention to address the abovementioned requirement.

According to one aspect, there is provided roof system for a vehicle having a fixed roof with a roof opening. The roof system including a stationary part configured to be attached to the fixed roof, at least a first panel movably supported on the stationary part and configured to close the roof opening in a closed position and to be moved at least rearwardly to an opened position in which the roof opening is at least partly opened, the first panel having a front edge and a rear edge. The roof system further including a pair of parallel guide rails supported by the stationary part and extending in longitudinal direction substantially parallel to opposite lateral sides of the roof opening, at least one transverse guide rail extending in a direction at an angle, preferably perpendicular, to the pair of parallel guide rails; and at least one operating mechanisms for each one of the parallel guide rails for operating the first panel. Wherein each respective operating mechanism includes a front mechanism capable of moving in the guide rail in a longitudinal direction and capable of moving the front edge of the first panel in a vertical direction. The front mechanism including a panel bracket attached to the first panel. Each operating mechanism further including a tilting mechanism capable of moving the rear edge of the first panel in a vertical direction, the tilting mechanism including a slide claw in slidable contact with the panel bracket. And each operating mechanism further including a locking mechanism for locking the tilting mechanism to the guide rail in order to keep the tilting mechanism stationary to the guide rail to enable the first panel to slide with respect to the kept stationary tilting mechanism. And wherein the parallel guide rails each slidably support the front mechanism and the tilting mechanism of the respective operating mechanism. And the at least one transverse guide rail slidably supports the locking mechanism of each respective operating mechanism. Such a configuration allows the front, tilting and locking mechanism to be mounted within the same plane and within a compact surface area. In this manner, the minimum height required for the roof system may be reduced.

According to another aspect, the roof system includes a first drive member operatively connecting the front mechanism to a drive motor, a second drive member operatively connecting the front mechanism to the locking mechanism, and a third drive member operatively connecting the locking mechanism to the tilting mechanism. In case of a front drive with drive motor at the front of the roof system, the first drive member may be directly connected to the front mechanism. In case of a rear drive with drive motor at the rear of the roof system, the first drive member may be indirectly, yet operatively, connected to the front mechanism e.g. via the second drive member.

According to another aspect, the at least one transverse guide rail of the roof system is positioned near a front end of the parallel guides, or near a rear end of the parallel guides, or rearward and remote from a rear end of the parallel guides, or remote from both the front and rear end of the parallel guides.

According to a further aspect, the operating mechanism of the roof system may be configured to slide the front mechanism out of the closed position towards an opened position, and to simultaneously slide the locking mechanism, via the second drive member towards and into a locking position. And further configured to slide the tilting mechanism out of the closed position into a tilted position. And to slide and lock, when the locking mechanism is in the locking position, the tilting mechanism via the third drive member while the tilting mechanism (is in the tilted position. And to slide the front mechanism via the first drive member into the opened position while the tilting mechanism is in the locked position.

According to another aspect, the operating mechanism of the roof system may be configured to slide the front mechanism via the first drive member out of the opened position towards the closed position while the tilting mechanism is in the locked position, and to slide the locking mechanism via the second drive member out of the locking position. And further configured to unlock and, when the locking mechanism is out of the locking position, slide the tilting mechanism towards the closed position via the third drive member while the tilting mechanism is in the tilted position. And to slide the tilting mechanism out of the tilted position into the closed position and to slide the front mechanism into the closed position.

According to yet another aspect, the locking mechanism includes a locking slot at an outer end of the second drive member, a hinge block at an outer end of the third drive member, a locking locator fixedly attached to the guide rail and a locking lever (41) slidably guided by the locking locator. The locking lever further pivotally connected at one end to the hinge block and releasably coupled at an opposite end with the locking slot. Herein the locking lever is movable between a sliding position and a tilt locking position via movement of the second drive member, wherein in the sliding position, the locking lever is unlocked in the locking locator and locked in the locking slot. And wherein in the tilt locking position, the locking lever is locked in the locking locator and decoupled from the locking slot.

According to a further aspect, the locking mechanism in the locking position is unlocked from the front mechanism when the second drive member is unlocked via the locking slot from the locking lever and locks the tilting mechanism when the third drive member is locked via the locking lever to the locator. And the locking mechanism in a sliding position is locked to the front mechanism when the second drive member is locked via the locking slot to the locking lever and unlocks the tilting mechanism when the third drive member is unlocked via the locking lever from the locking locator.

According to yet a further aspect, the transverse guide rail of the roof system includes for each of the parallel guide rails, a first guide channel for guiding the second drive member of the respective parallel guide rail. And/or may further include for each of the parallel guide rails a second guide channel for guiding the third drive member of the respective parallel guide rail.

Further objects, aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawing, wherein:
Figs. 1A and 1B are schematic perspective views of a vehicle roof having a roof system of which the panel is shown respectively in closed and open position;
Figs. 2A and 2B are plan views of different embodiments for the vehicle roof of Fig. 1A;
Fig. 3 is a plan view of a part of the vehicle roof of Fig. 2A without the panel, and with the frame;
Fig. 4A and 4B are exploded views of the parts of the operating mechanism for the panel of the roof system of Fig. 2A, viewed from the laterally outside and inside;
Fig. 4C and 4D are exploded views of the parts of an alternative operating mechanism for the panel of the roof system of Fig. 2A, viewed from the laterally outside and inside;
Fig. 4E is an exploded view of another alternative operating mechanism for the panel of the roof system of Fig. 2A, viewed from the laterally outside;
Fig. 5 is a plan view of the operating mechanism of Fig. 3 without the guide rail in which it is mounted;
Figs. 6A-6C - 7A-7C are side views from the outside and the inside of the operating mechanism of Figs. 4A and4B in three different positions without the guide rail;
Figs. 8 - 13A, 14-17 are enlarged sectional views along the lines VIII to XVII in Fig. 5;
Figs. 13B, is a sectional view along lines XIIB Fig. 2;
Fig. 18 is a sectional view taken across the guide rail with panel 4 in a slide position showing the front slide shoes as along line XVIII in Fig. 3;
Fig. 19 is a plan view of a transverse part of the operating mechanism showing the locking mechanism and part of a transverse guide with a service hole.
Figs. 20 is a sectional view along line XX Fig. 3;
Fig. 21 is a true side view on the sliding guide looking from the lateral outward side towards the center of the vehicle;
Fig. 22 is a side view of a locking slot;
Fig. 23 is a side view of a locator;
Figs. 24A-Dare exploded views of the parts of alternative locking mechanisms of the operating mechanism for the panel of the roof system of Fig. 2A;
Figs. 25A-D, 26A-D are schematic plan views of the operating mechanism and several embodiments of the guide rail geometry in different embodiments of the roof system having at least a movable first panel;
Figs. 27-29 are schematic sectional views of the operating mechanism according to respective line combinations A-A' & B-B', A-A' & C-C', and A-A' & E-E' in Figs.25A, 26C and 26D.

The present invention will now be described with reference to the accompanying drawings, wherein the same reference numerals have been used to identify the same or similar elements throughout the several views.

### DETAILED DESCRIPTION

In the following description spatial references as, for example, front, side and rear, or underneath, below and above, or forward and rearward direction and driving movement, are made with regard to the general orientation of a vehicle, such as a passenger car. And in particular to a driver behind a steering wheel of such as vehicle. In addition, X-, Y- and Z-direction will refer to a direction corresponding to length, width and height of a vehicle. In the figures, a forward driving movement of a vehicle may be indicated by an arow D, and consequently pointing in a direction towards a front side of vehicle.

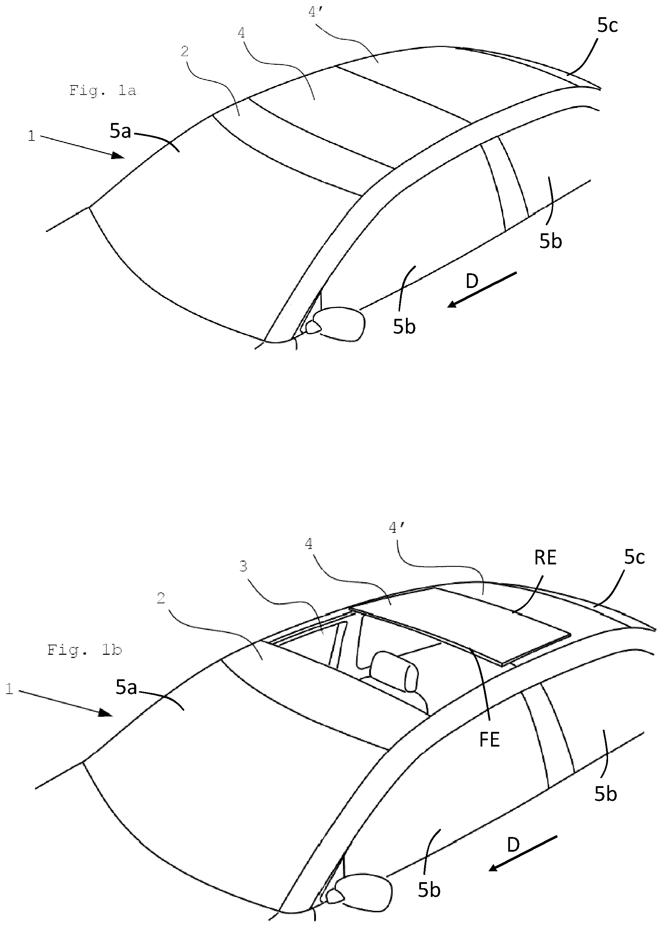

Referring to Figs. 1A and 1Bb, a roof system is schematically illustrated. In a fixed roof 2 of a vehicle 1 a roof opening 3 is defined which can be closed, Fig. 1A, and opened, Fig. 1B, by a movable closure, here a rigid first panel 4. The panel may be partially transparent or at least partly translucent, and e.g. made of glass, plastic or the like. The roof system may include a second panel 4' which is generally a fixed panel but may also be movable as well, for example to open and close a second opening. Further indicated are a front window 5a, side windows 5b and rear window 5c.

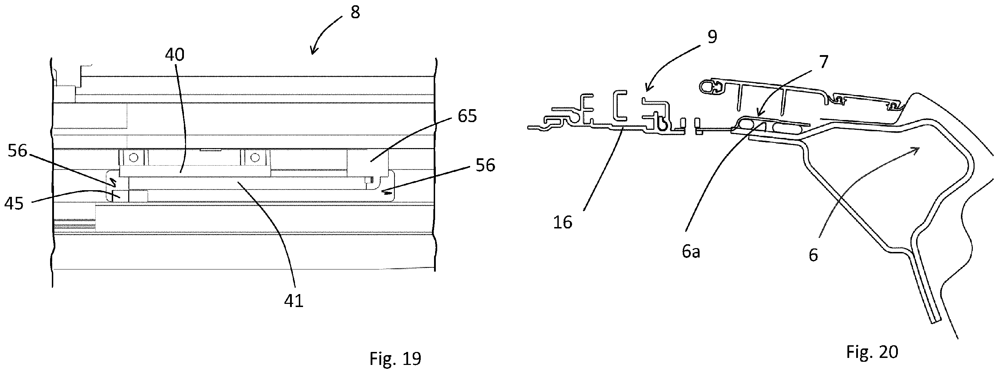

The roof system may be a so-called top-loaded roof system in which a stationary part 7 of the roof system, such as a support frame or other carrier structure, is introduced onto the roof opening 3 from above, resting on the fixed roof 2, normally in particular on a flange 6a of a roof beam 6, see Fig. 20. The stationary part 7 may be attached to the fixed roof 2 of vehicle 1 in a suitable manner, preferably gluing, but also welding and bolting would be possible, depending on the materials used. In other embodiments, the roof system may be a bottom-loaded roof system.

The roof system shown here is referred to as an exterior slider, also called a spoiler roof, in which panel 4 is movable from its closed position upwardly, at least with its rear side, and then rearwardly to a variety of positions above the fixed roof 2, or in this embodiment above rear panel 4'. An operating mechanism 10, in particular parts for supporting the panel 4, remains mainly within the roof opening 3, contrary to a top slider roof in which rear supports of the panel 4 slide in guide rails 9 that extend or are extended to positions behind roof opening 3. The moveable panel 4 may be in a closed position, which is a position wherein the moveable panel 4 is arranged over and closes the roof opening 3 and thus usually is arranged in a plane of the vehicle roof 2. Further, the moveable panel 4 may be in a tilted position, which is a position wherein a rear end RE of the moveable panel 4 is raised as compared to the closed position, while a front end FE of the moveable panel 4 is still in the closed position. Further, the moveable panel 4 may be in an open position, which is a position wherein the moveable panel 2a is slid open and the first roof opening 3a is partly or completely exposed. In the open position, for example both the rear end RE and front end FE may be raised as compared to the closed position.

It is noted that the illustrated vehicle roof 1 corresponds to a passenger car. The present invention is however not limited to passenger cars. Any other kind of vehicles that may be provided with a moveable panel are contemplated as well.

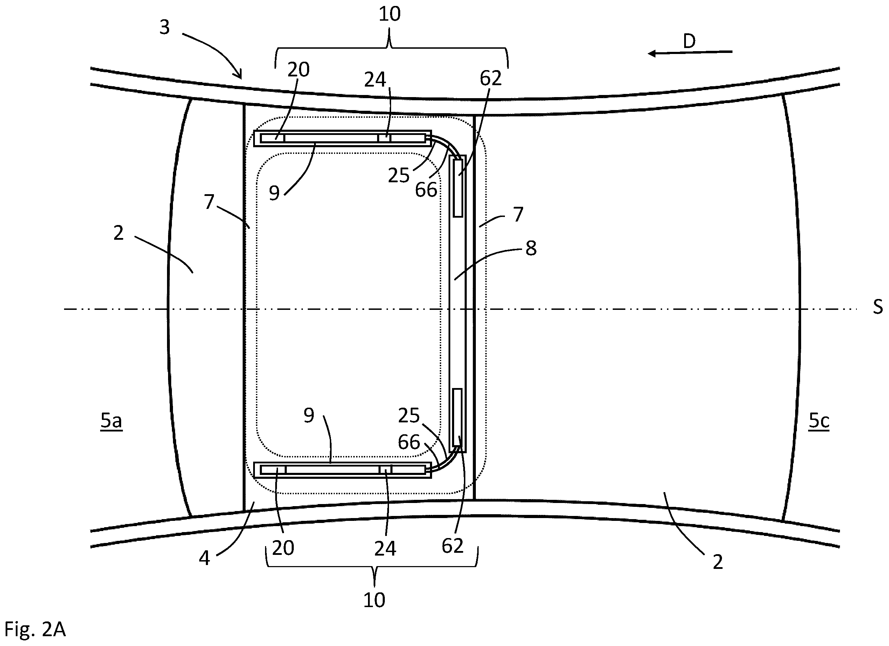

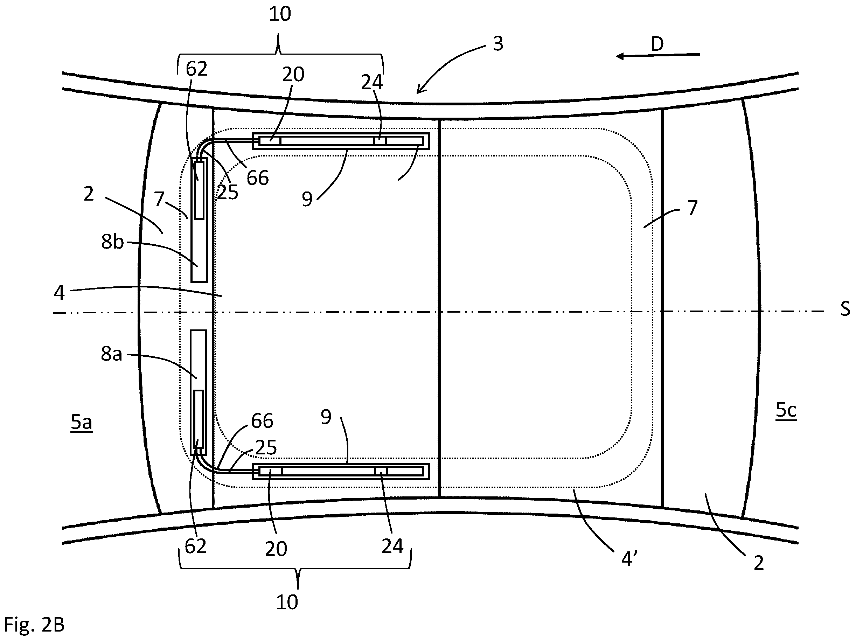

In order to operate the movable panel 4 between the closed position, tilted and open positions, the roof system is provided with at least one operating mechanism. Referring to Figs. 2A and 2B, plan views of fixed roof with different embodiments of the roof system are shown. Herein, operation mechanisms 10 and pairs of parallel guide rails 9 of different embodiments are shown schematically, for sake of clarity, with solid lines within the surface areas covered by the panels 4, 4'. The roof system is usually symmetrical with reference to an axis of symmetry S. Front and rear in relation to the vehicle 1 match with front window 5a and rear window 5c, and further corresponds to arrow D indicating forward driving direction.

In Fig. 2A, the fixed roof 2 of vehicle 1 is shown with a roof system having a first, single panel 4, in this example a top loaded roof system. The panel 4 is located between a front portion and a rear portion of the roof 2. The roof system includes a stationary part 7, such as carrier frame or other supporting structure, that is configured to be attached to the fixed roof 2. The first panel 4 is movably supported on the stationary part 7 and configured to close the roof opening 3 in a closed position and to be moved rearwardly to an opened position in which the roof opening 3 is at least partly opened. In this first embodiment of a roof system, the guide rails 9 extend in parallel from front to rear on left and right lateral sides of the roof opening 3 and a transverse guide rail 8 extends in a direction at an angle, preferably perpendicular, to the pair of parallel guide rails 9. The transverse guide rail 8 is located rearward near rear ends of the parallel guide rails 9. The roof system includes two operating mechanisms 10, one for each of the parallel guide rails 9. Each operating mechanism 10 includes a front mechanism 20, a tilting mechanism 24, and a locking mechanism 62. The parallel guide rails 9 each slidably support the front mechanism 20 and the tilting mechanism 24 of the respective operating mechanism 10. And the transverse guide rail 8 slidably supports the locking mechanism 62 of each respective operating mechanism 10.

In Fig. 2B, the fixed roof 2 of vehicle 1 is shown with a roof system having a first and a second panels 4, 4'. The panels 4, 4' are located between a front portion and a rear portion of the roof 2. The roof system again includes the stationary part 7, yet larger as that in Fig. 2A, and is configured to be attached to the fixed roof 2. The first panel 4 is movably supported on the stationary part 7 and configured to close the roof opening 3 in a closed position and to be moved rearwardly to an opened position in which the roof opening 3 is at least partly opened. The second panel 4' is also supported on the stationary part 7, in this embodiment non-movable, yet in other embodiments it may be movable. The second panel 4' closes a second or remaining part of the roof opening 3, that is the part not covered by the first roof panel 4 in the closed position. In this second embodiment of the roof system, the guide rails 9 also extend in parallel from front to rear on left and right lateral sides of the roof opening 3. And the transverse guide rail 8 is split int two separate parts 8a, 8b, which each extend in a direction at an angle, preferably perpendicular, to the pair of parallel guide rails 9. The transverse guide rails 8a, 8b are located in front of and near front ends of the parallel guide rails 9. The roof system includes two operating mechanisms 10, one for each of the parallel guide rails 9. Each operating mechanism 10 again includes the front mechanism 20, the tilting mechanism 24, and the locking mechanism 62. The parallel guide rails 9 each slidably support the front mechanism 20 and the tilting mechanism 24 of the respective operating mechanism 10. And the transverse guide rail 8 slidably supports the locking mechanism 62 of each respective operating mechanism 10.

Still referring to Figs. 2A and 2B, the front mechanism 20 is capable of moving in the guide rail 9 in a longitudinal direction, and capable of moving the front edge of the first panel 4 in a vertical direction. The front mechanism 20 may include a panel bracket 22 attached to the first panel 4. The tilting mechanism 24 is capable of moving the rear edge of the first panel 4 in a vertical direction, the tilting mechanism 24 including a slide claw 32 in slidable contact with the panel bracket 22. The locking mechanism 62 is for locking the tilting mechanism 24 to the guide rail 9 in order to keep the tilting mechanism 24 stationary to the guide rail 9 to enable the first panel 4 to slide with respect to the kept stationary tilting mechanism 24.

In general, the pair of parallel guide rails is supported by the stationary part and extend in longitudinal direction substantially parallel to opposite lateral sides of the roof opening, and at least one transverse guide rail extends in a direction at an angle, preferably perpendicular, to the pair of parallel guide rails 9. Hence, the orientation of the transverse guide rail is such that a virtual longitudinal axis corresponding thereto will intersect with virtual longitudinal axes of each of the parallel guide rails. Thus, transverse may imply any angle at which the guide rails may intersect.

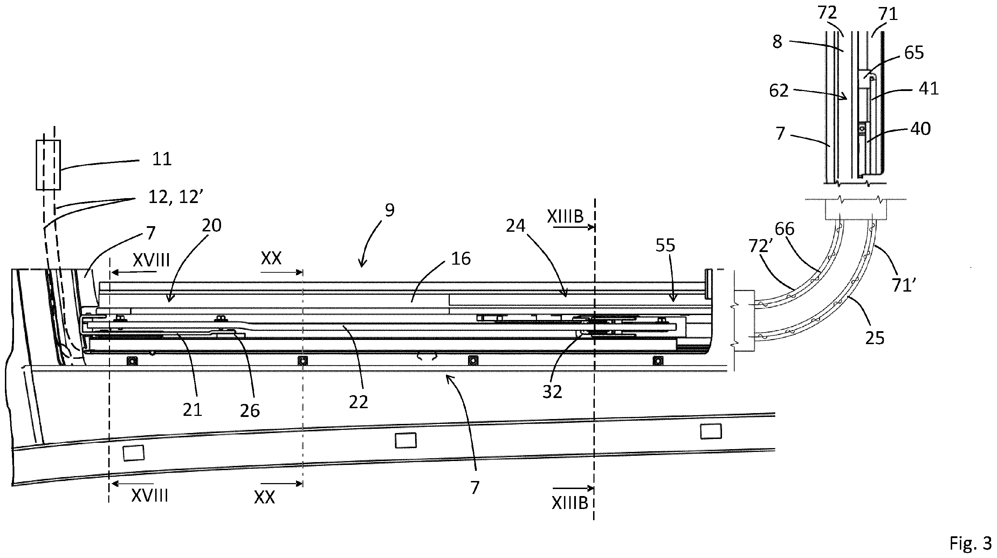

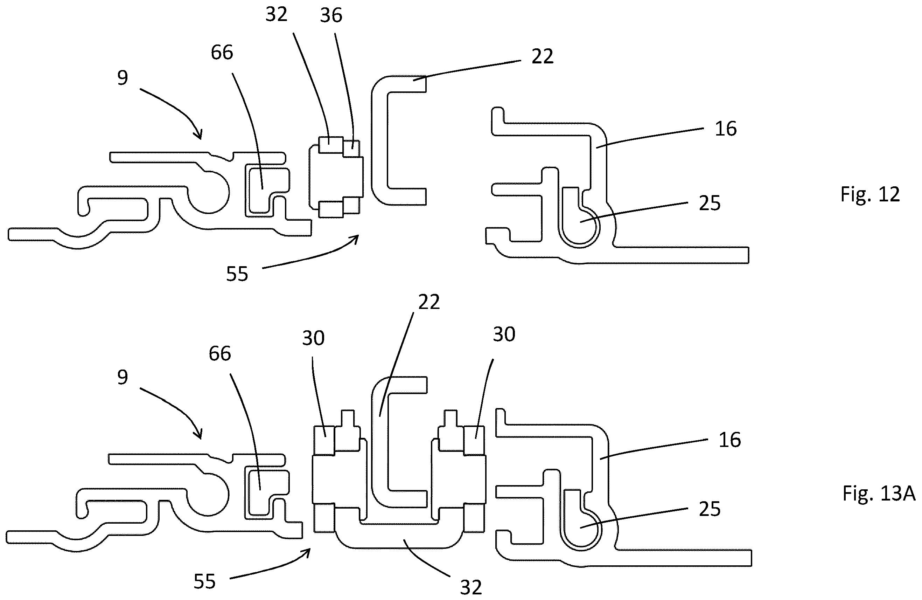

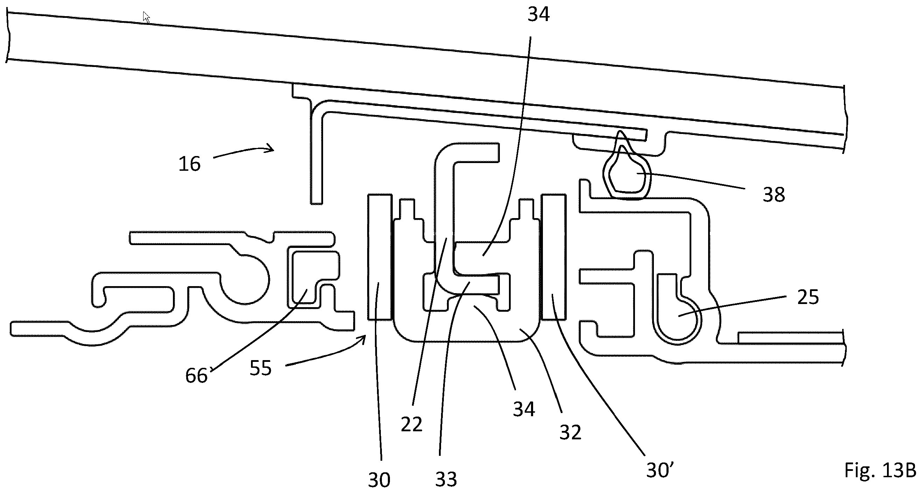

Referring to Fig.3, one lateral side of the roof system of Fig. 2A is shown in more detail. It shows one of the guide rails 9 supported by the stationary part 7, together with front mechanism 20 and the tilting mechanism 24. Also shown is transverse guide rail 8 supported by the stationary part 7, together with the locking mechanism 62. In this case stationary part 7 is made from plastic material by injection molding providing great freedom of design. However, it is also possible that the stationary part 7 is made of another material, for instance steel. The stationary part 7 or the guide rail 9 carry a panel seal 38, as shown in Fig. 13B, which seals panel 4 from below. Guide rail 9 is fixed to frame 7 in longitudinal direction below each side edge of panel 4. The length of guide rail 9 is such that it extends substantially from the front to the rear of roof opening 3, whereby in case of a second panel 4', the guide rail 9 may extend all the way to the rear of the second panel 4'.

Still referring to Fig. 3, the operating mechanism 10 is connected to and guided in each guide rail 9 and may be driven by a drive motor 11, such as an electric motor, that is capable of driving parts of the operating mechanism 10 through main, first drive members 12, 12', in this embodiment embodied as drive cables. Each first drive member 12, 12' will drive one operating mechanism of one of the respective guide rails. Thereto, the first drive member s 12, 12' are operatively connected to the front mechanism. For example, in case of a front drive with drive motor at the front of the roof system, the first drive member may be directly connected to the front mechanism. Where, in case of a rear drive with drive motor at the rear of the roof system, the first drive member may be indirectly connected to the front mechanism e.g. via the second drive member. Yet it is also contemplated that a rear drive may have the first drive member directly connected to the front mechanism, or a front drive may have the first drive member indirectly connected to the front mechanism. Either way, the first drive member is operatively connected to the front mechanism.

Parts of the operating mechanism 10 may be interconnected by second and third drive members. In particular, the front mechanism may be connected with the locking mechanism 62 via a drive link member i.e. second drive member 25, in this case a cable. And the tilting mechanism may be connected to the locking mechanism 62 via a drive connect member i.e. third drive member 66, in this case also a cable. In other embodiments, any of these drive members may be implemented as a plastic rod or other suitable material elements.

Furthermore, the second drive member 25 i.e. drive link member may form an integral portion of the main, first drive member 12, 12', such as when embodied as a drive cable. In particular, when the drive motor is placed rearward of the roof system, referred to as rear drive, the first drive member is preferably integrated with the second drive member and accordingly operatively connected to the front mechanism.

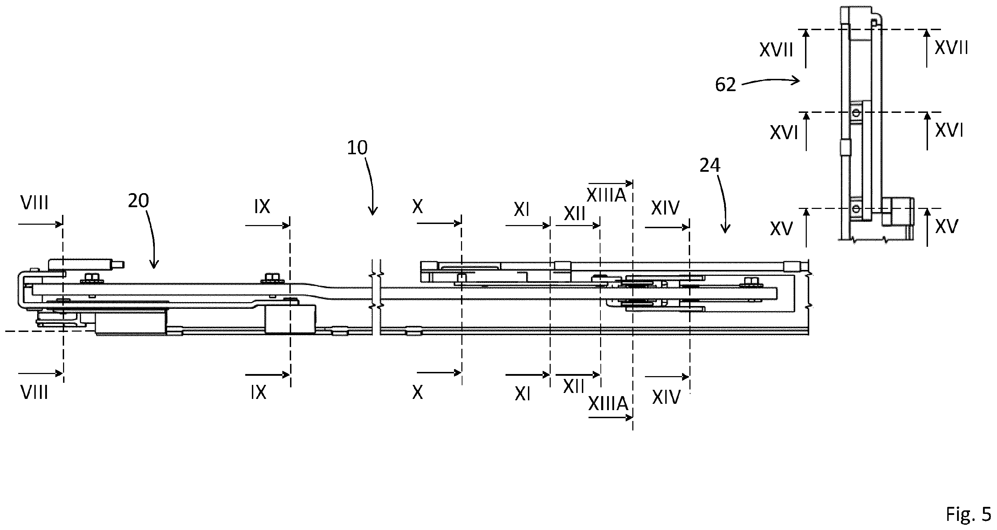

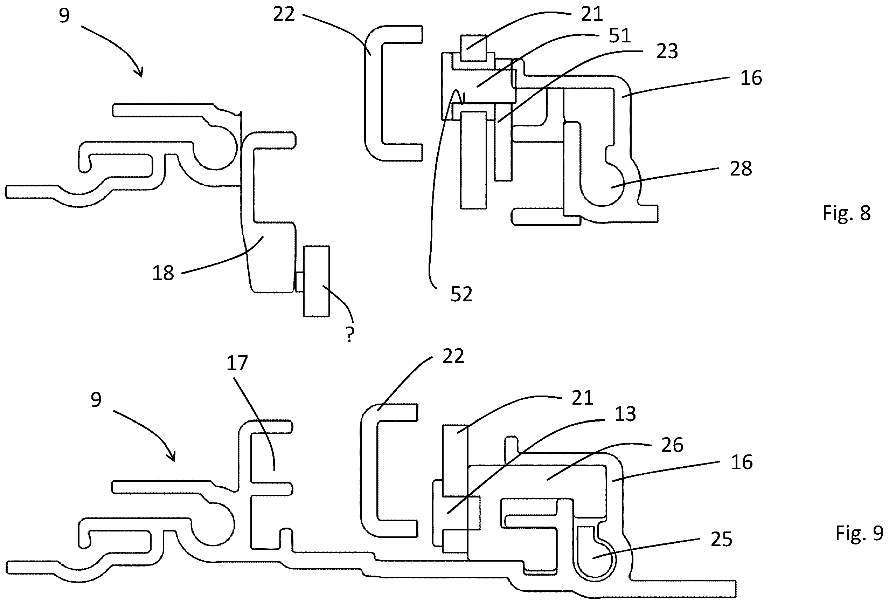

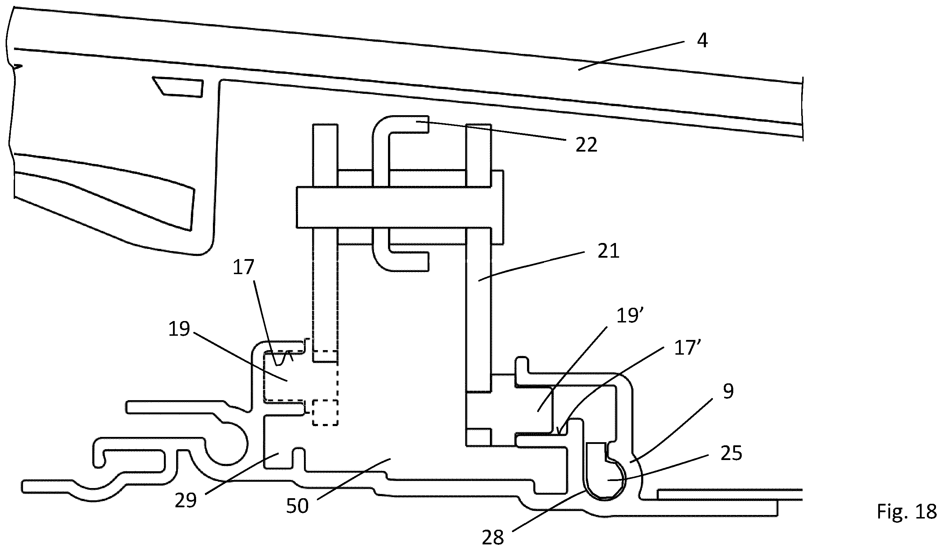

Referring to Figs. 3 -7, embodiments of the operating mechanism 10 and components hereof will be described in more detail. Cross sections of such embodiments along lines VIII-VIII' through XVII-XVII' in Fig. 5 are illustrated in corresponding Figs. 8-17. Cross sections along line XVIII-XVIII', XIIIB-XIIIB' and XX-XX' in Fig. 3 are illustrated in corresponding Figs. 18, 13B and 20.

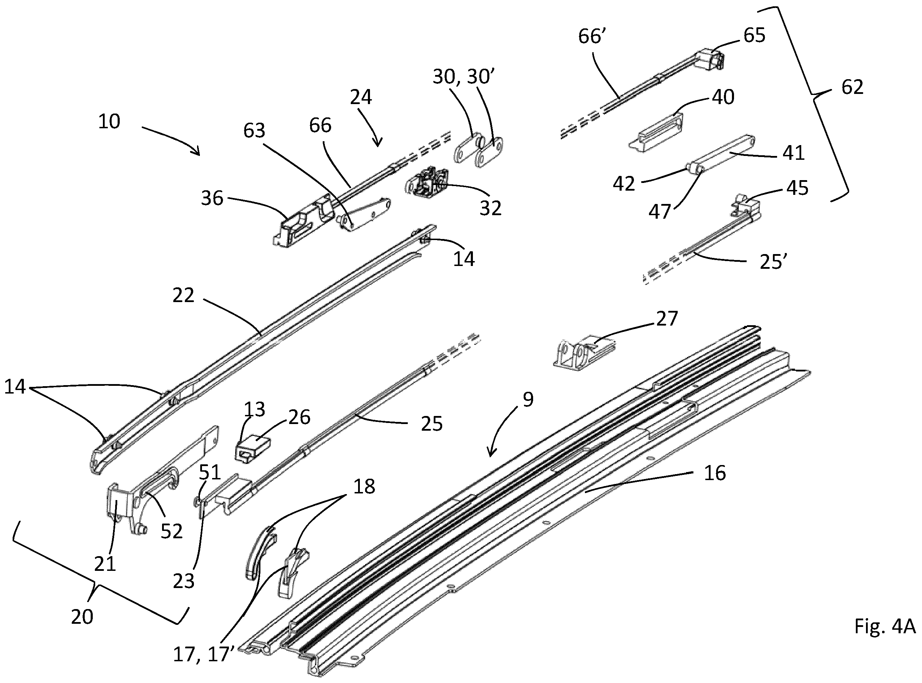

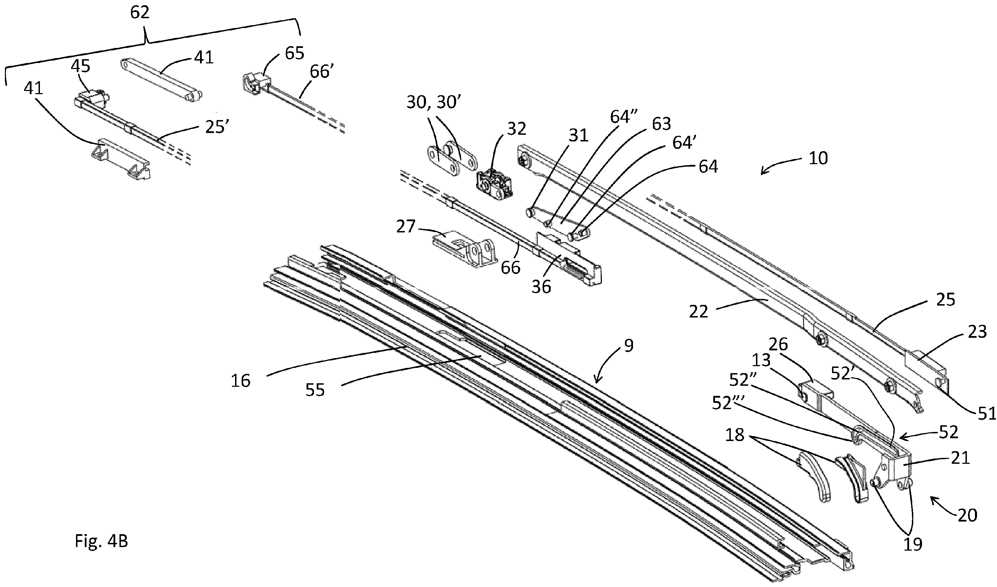

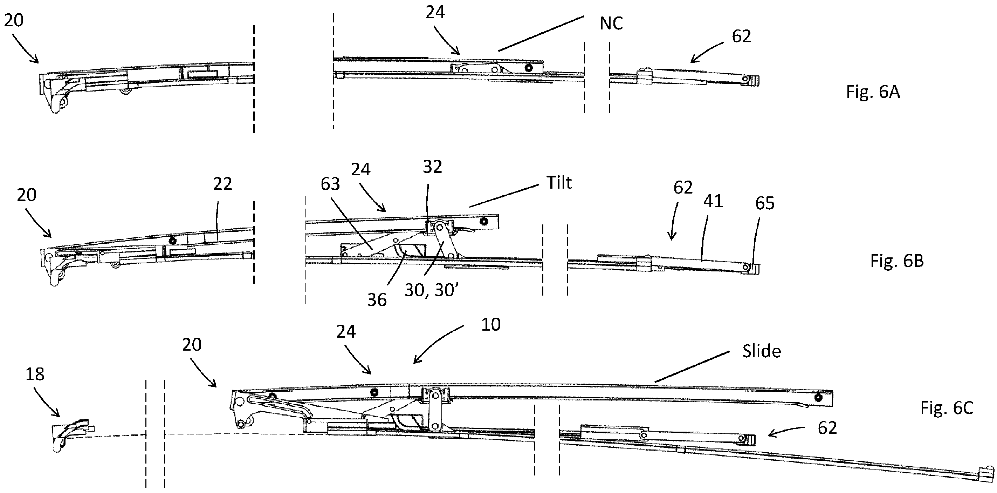

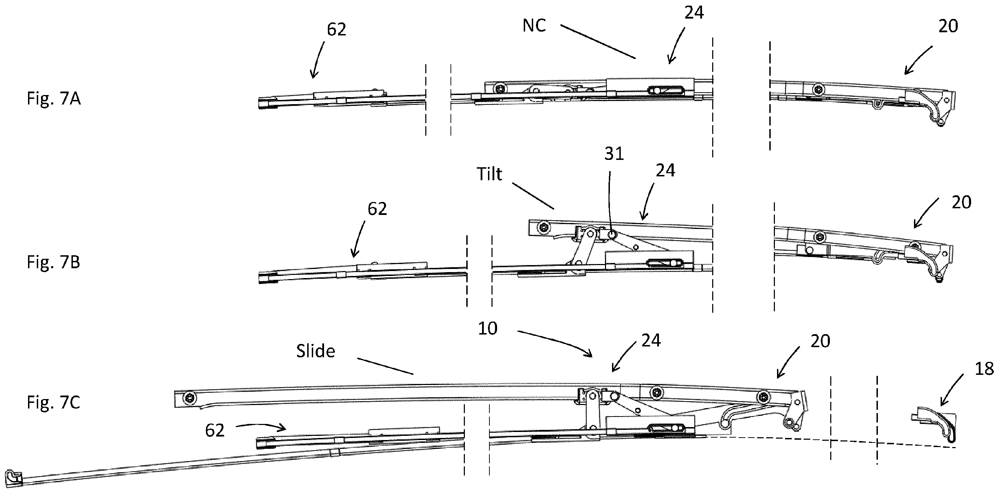

Fig. 4A and 4B illustrate schematically one of the guide rails 9 and operating mechanism 10. It should be kept in mind that the roof system includes an equal guide rail 9 and operating system 10 on the opposite side, albeit configured as a mirror image. The locking mechanism 62, though located in the transverse guide rail 8 and actually at angle in relation the to the guide rail 9, is shown in this exploded view in parallel to indicate the relation between front and rear portions of second drive member 25, 25' and third drive member 66, 66'. Guide rail 9 includes an extrusion profile 16, for example from aluminum, having one or more guide grooves 17, 17', 50 and guide channels 28, 29. The extrusion profile 16 is straight or slightly bent downwards to follow the downward curvature of fixed roof 2 of vehicle 1. Further Figs. 4A and 4B show the operating mechanism 10 from respectively the lateral outward side looking inwardly into the vehicle 1 and the lateral inward side looking outwards of the vehicle 1. Operating mechanism 10 includes the front mechanism 20, the tilting mechanism 24 and the locking mechanism 62. Each of these mechanisms has a particular function in the movement of panel 4, related to each of the positions that the panel 4 may be positioned. Figs 6A-6C and 7A-7C show these positions as being the normal closed position NC, the tilt position Tilt and the open position Slide. In particular, Figs. 6A and 7A illustrate the position of the operating mechanism 10 of the roof system in normally closed position NC from laterally inside and outside. Figs. 6B and 7B illustrate the position of the operating mechanism 10 of Figs. 6A and 7A roof system in tilt position, and Figs. 6C and 7C illustrate the position of the same operating mechanism 10 in slide position.

The front mechanism 20, in closed position, is capable of locking panel 4 in a longitudinal direction. And when the rear of the panel 4 has been lifted in a vertical direction towards a so-called "tilt" position the front mechanism 20 is capable of lifting the front of the panel 4 and subsequently capable of sliding the panel 4 rearwards in a longitudinal direction. The front mechanism 20 is driven by main drive members 12, 12' which in turn are driven by the electric motor 11.

The tilting mechanism 24 is capable of lifting the rear end of panel 4 to the tilt position and is capable of supporting panel 4 when the panel 4 moves rearward in longitudinal direction. The tilting mechanism 24 is driven by locking mechanism 62.

The locking mechanism 62 is capable of transferring the longitudinal movement of the second drive member 25 towards the tilting mechanism 24. When the tilting mechanism 24 has reached the required tilt height of the rear end of the panel 4, the locking mechanism 62 locks the tilt mechanism 24. This means that the locking mechanism 62 functions as a mechanical lock that prevents the tilting mechanism 24 from moving further in any vertical direction going upwardly or downwardly. The locking mechanism 62 is driven by second drive member 25 which in turn is driven by the driving slide 23 of the front mechanism 20. And further the locking mechanism 62 is capable of decoupling from the second drive member 25 and the drive member 25 is capable of continuing to be moved in a longitudinal direction and therewith the front mechanism 20 to continue its longitudinal motion to slide the panel 4 to the rear, see also Figs. 6A-6C and 7A-7C.

Referring to Figs. 6A-6C and 7A-7C, the movement of the operating mechanism 10 for opening and closing of the roof system will be explained in more detail. As mentioned, the main, first drive member will drive the front mechanism 20, the link, second drive member 25 will drive the locking mechanism 62 as it is linked to the front mechanism, and the connect, third drive member 66 will drive the tilting mechanism 24. The operating mechanism 10 is configured to slide the front mechanism 20 out of the normally closed position towards an opened position, Figs. 6A and 7A. And to simultaneously slide the locking mechanism 62 via the second drive member towards and into a locking position. The operating mechanism 10 is further configured to slide the tilting mechanism 24 out of the closed position into a tilted position, Figs. 6B and 7B. And to slide and lock, when the locking mechanism 62 is in the locking position, the tilting mechanism 24 via the third drive member 66 while the tilting mechanism 24 is in the tilted position. With the tilting mechanism is locked and in the tilting position, operating mechanism continues by sliding the front mechanism 20 via the first drive member 25 into the opened position while the tilting mechanism 24 is in the locked position, Figs. 6C and 7C.

The above describes the movements when opening, for closing the roof panel, a reverse order is performed. The operating mechanism 10 is configured to slide the front mechanism 20 via the first drive member 12 out of the opened position towards the closed position while the tilting mechanism 24 is in the locked position. And to slide the locking mechanism 62 via the second drive member 25 out of the locking position, Figs. 6C and 7C. The operating mechanism 10 is further configured to unlock and, when the locking mechanism 62 is out of the locking position, slide the tilting mechanism 24 towards the closed position via the third drive member 66 while the tilting mechanism 24 is in the tilted position, Figs. 6B and 7B. And to slide the tilting mechanism 24 out of the tilted position into the closed position and to slide the front mechanism 20 into the closed position, Figs. 6A and 7A.

Returning to Figs. 4A and 4B, the front mechanism 20, tilting mechanism 24 and locking mechanism are illustrated in more detail. The front mechanism 20 includes a driving slide 23, slidably guided in the guide rail 9 and driven by a respective first drive members 12, 12'. In this embodiment, the driving slide is provided with a driving cam 51 which is slidably connected with a curve track 52 in a front lever 21. In another embodiment, the curve track 52 may be provided in the panel bracket 22. The front lever 21, is hingeably connected by means of a pivot pin 13 to a pivot block 26 at its rear end, see also Fig. 9, and at an opposite front end the front lever 21 is equipped with a pair of front slide shoes 19 that are slidably guided in guide grooves 17, 17' while the panel 4 moves in and out of the closed position. The guide grooves 17,17' extend from in the guide rail 9 in a downwardly extending pair of inserts 18. In the inserts 18 the guide grooves 17,17' extend in a curved shape. In this embodiment, the slide shoes 19 are attached at lateral sides of front lever 21 and are seen in longitudinal direction, arranged in a staggered manner i.e., one after the other.

The front end of the front lever 21 is hingeably connected with a front end of panel bracket 22. Said panel bracket 22 extends in longitudinal direction to the rear and is slidably connected to the tilting mechanism 24 via a slide claw 32. The panel bracket 22 may be connected to panel 4 by means of screws 14. The driving slide 23 is connected to second drive member 25 that extends to the rear in longitudinal direction. Drive member 25 is in this embodiment basically an extension of the first drive member 12, 12', implemented as a plastic part connected to the driving slide 23 and slidably guided in a guide channel 28 in the guide rail 9.

Upon movement of the first drive member 12, 12', slidably guided in a guide channel 28 in the guide rail 9, in longitudinal direction to the rear, driving slide 23 moves to the rear and the driving cam 51 on the driving slide 23 moves to the rear in the curve track 52 of the front lever 21. The curve track 52 in the front lever 21 has a first part 52' which is substantially horizontal and so the driving cam 51 slides in the first part 52' of the curved track 52 such that the front lever 21 does not move. The rear end of the curved track 52 has a second part 52" in the shape of a radius in downward direction and the third part 52‴ of the curve track 52 is substantially perpendicular to the first part 52' of the track 52. By continuing the rearward movement of the cam 51 in the curve track 52, the driving cam 51 arrives in the second part 52" of the track, hence the driving cam 51 gradually starts to pull the front end of the front lever 21 in an upward direction due to the radius shape of second part 52" and when the driving cam 51 arrives in the third part 52"', the cam 51 is locked in the third part 52‴ and causing the lever 21 being pulled in a longitudinal rearward direction. The front lever 21 at its front end is hinge ably connected to the front end of panel bracket 22. Thus, upon a vertical movement of the front lever 21, induced by the second part 52" of the curved track 52, the front slide shoes 19 attached at the front end will move in an upward direction following the curved guide grooves 17, 17' in the inserts 18 and likewise the front end of the panel bracket 22 follows in the vertical movement, therewith raising the front edge of panel 4. Once the driving cam 51 of the driving slide 23 is in the third part 52‴ of the curved track 52, the front lever 21 is pulled rearwards and the slide shoes 19 of the front lever 21 will be slidably guided into the guide grooves 17, 17' of the guide rail 9, see also Fig. 18. and thus be guided rearwardly in longitudinal direction and therewith the front lever 21 and the panel bracket 22. Thus, in this manner panel 4 will be opened gradually.

The tilting mechanism includes a sliding guide 36, a rear i.e. tilting lever 63, and slide claw 32. The sliding guide 36 includes one ore more guide slots 35, 35', 35" that cooperate with respective guide pins 64, 64', 64" of the tilting lever 63, as will be explained below. The tilting mechanism 24 may further include lifting levers 30. 30' hingeably connected to a lift housing 27 and pivotally connected to the slide claw 32. In other embodiments, the lifting levers may be pivotally connected to the tilting lever. The locking mechanism 62 includes a locking locator 40, a locking lever 41, a hinge block 65 and a locking slot 45. The tilting mechanism 24 is connected to the locking mechanism 62 via third drive member 66, in this embodiment a connecting cable 66,66'. In Figs. 4A-4D, the third drive member 66 is illustrated interrupted, with drive member portion 66' illustrating a rear end of the connecting cable 66.

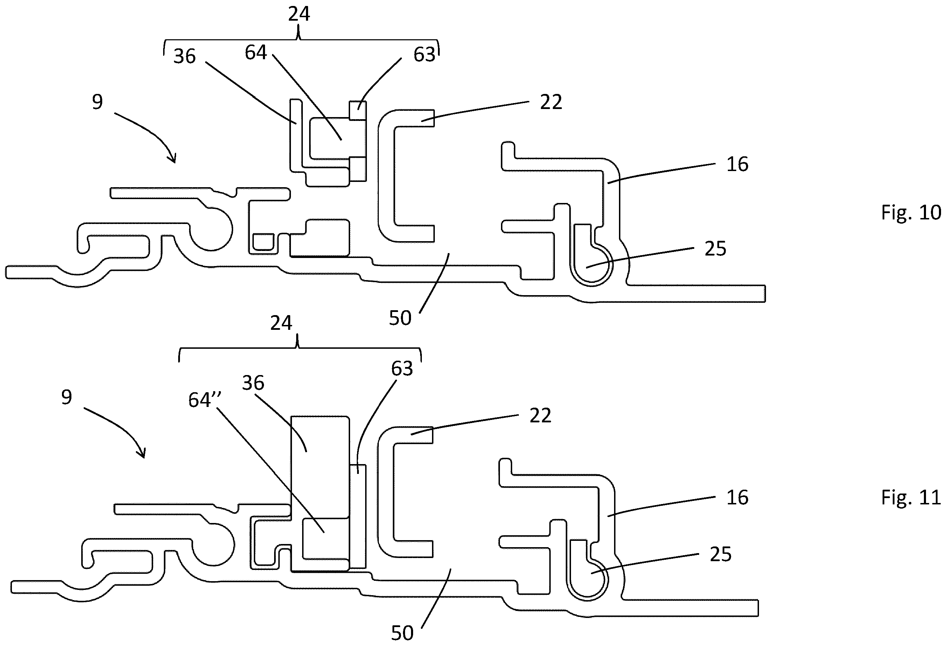

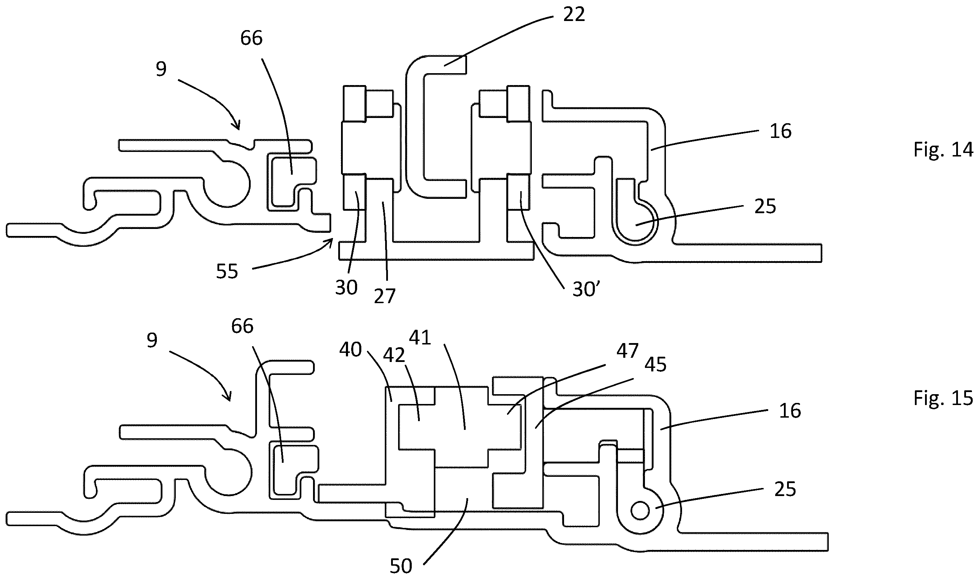

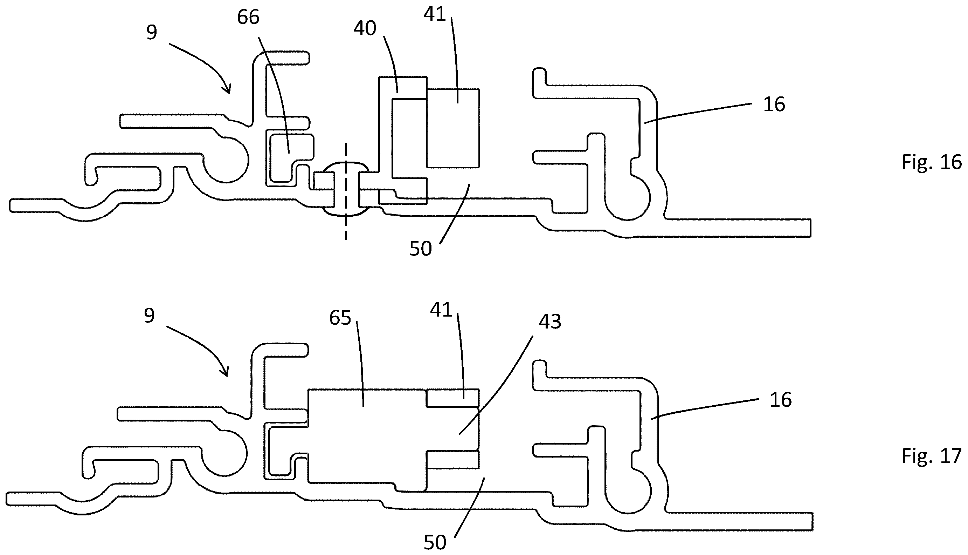

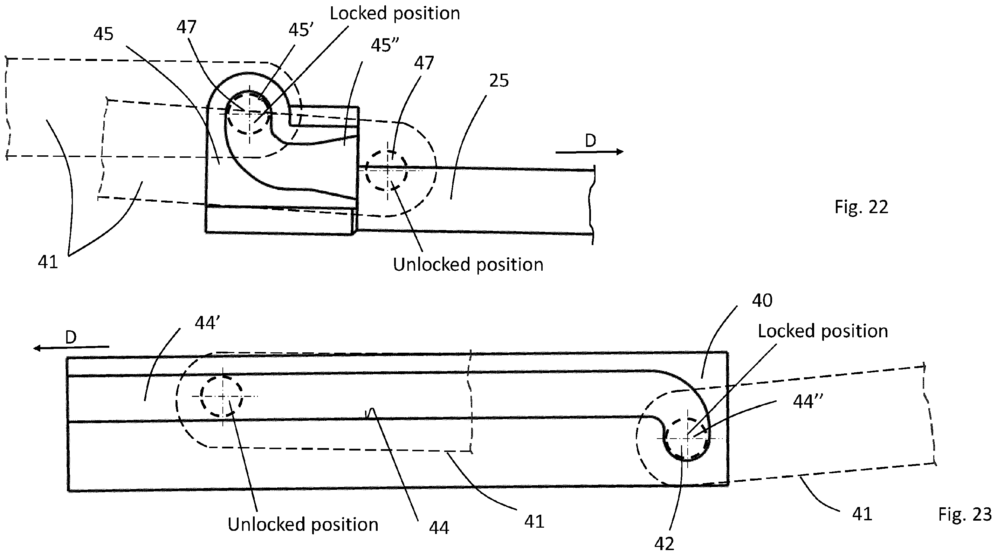

When panel 4 is in its closed position the tilting mechanism 24 is folded flat substantially within the guide rail 9 and, see Figs.10-14. Same as the locking mechanism 62 which is arranged in guide groove 50, see figs. 15, 16 and 17. As can be seen from these figures, there is plenty of space for the arrangement of the locking mechanism 62 right at the center of guide rail 9. Upon movement to the rear second drive member 25, slides in guide channel 28 rearwards. Second drive member 25 is releasably engaged with locking lever 41, and thus locking lever 41 slides to the rear too. Locking lever 41 is equipped with a locking cam 47 at its front end on one lateral side of the locking lever 41. Said locking cam 47 is engaged with a locking slot 45 at the end of the second drive member 25. A locking pin 42 is attached at the lateral opposite side of the locking lever 41. With reference to Figs. 22 and 23, said locking pin 42 is slidably guided in a pin slot 44 of the locking locator 40. Locking locator 40 is fixedly attached to guide rail 9. Said pin slot 44 comprises basically two parts, whereby the first part 44' extends substantially in a horizontally longitudinal direction and the second part 44" extends perpendicularly to the first part 44' in, in this embodiment, a vertical downward direction. The locking lever 41 at its rear end, is pivotally connected to a hinge block 65. Said hinge block is slidably guided in guide groove 50 of the guide rail 9 and is further connected to a connecting cable 66 which cable extends towards the tilting mechanism 24 in another guide channel 29. Upon a continued movement rearward, the locking lever 41 and therewith the locking pin 42 will move rearward in the first part 44' of the pin slot 44. Because this first part extends substantially horizontally, the rearward movement of the locking lever 41 is continued uninterrupted via the hinge block 65 onto the connecting cable 66 towards the tilting mechanism 24. When the locking pin 42 moves into the second part 44" of the locking track 44, the locking lever 41 pivots around its hinge 43 at the hinge block 65, see Fig. 17, and the front end of the locking lever 41 moves vertically in a downward direction, therewith decoupling the locking cam 47 from the locking slot 45, and thus from the second drive member 25. In case drive member 25 is driven further rearwardly, it will continue to move without being connected to the locking lever 41. This means that the locking lever 41, being locked in the locator 40 does not further move the tilting mechanism 24 and the tilting mechanism is thus at the end of its vertical movement and is in this position stationary supporting panel 4.

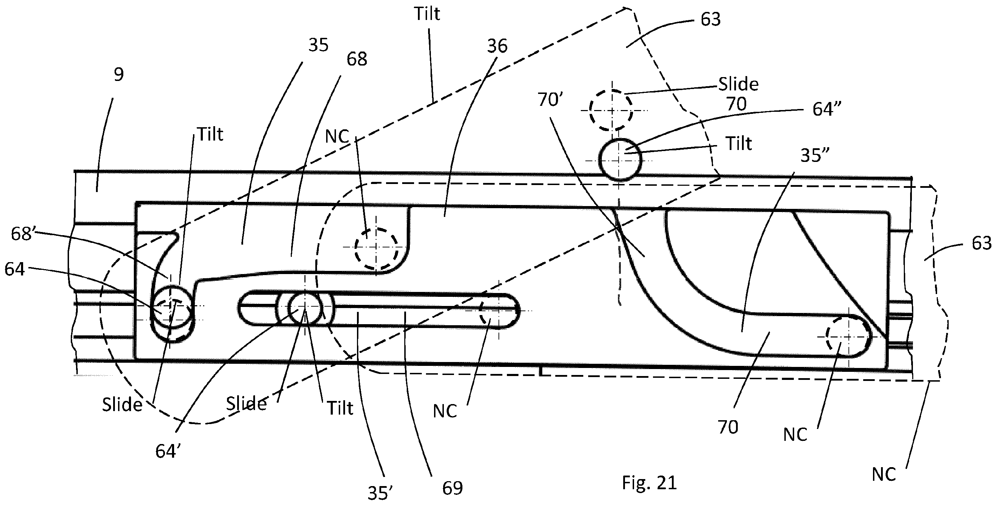

Considering the operation of the tilting mechanism 24 from the closed position of the panel 4 towards the tilted position of the panel 4 whereby the rear of the panel 4 is lifted in vertical direction. Referring to Fig. 21, connecting cable 66 is moved rearwards in guide channel 29 as described before. Attached to the connecting cable 66 is the sliding guide 36. This sliding guide 36 comprises three guide slots 35, 35', 35". The tilting lever 63 is engaged to the sliding guide 36 by means of three guiding pins 64, 64' 64" slidably engaged with the three guide slots 35, 35', 35". Guide slot 35 is positioned at the front of the sliding guide 36 and comprises a horizontal slot portion 68 and an interconnected vertical slot portion 68'. Guide slot 35' is a slot which has a substantially horizontally extending slot 69 and third guide slot 35" of the sliding guide 36 comprises a first substantially horizontal portion 70 and a subsequent upwardly curved portion 70'. The tilting lever 63 additionally has a pivot pin 31 at the rear end of said lever pivotally engaging the slide claw 32. In other embodiments, the pivot pin may be connected to the lifting levers. Slide claw 32 has been provided with preferably plastic lining 34, see Fig. 13B, which slidably circumvents the lower part of panel bracket 22 and the panel bracket guide 33. Slide claw 32 is pivotably connected to a pair of lifting levers 30, 30', which levers are at their opposite end hingeably connected to housing 27. Said housing 27 is fixedly connected to the guide rail 9. So, when the connecting cable 66 is being moved rearwardly, so moves sliding guide 36 rearwardly too.

Referring now to Fig. 21, due to the longitudinal movement of the sliding guide 36 the guiding pins 64, 64', 64" are forced to follow the shape of the guide slots 35, 35', 35". This means that from a longitudinal position in the guide rail 9 when the panel 4 is in its closed position, towards a position in which the panel 4 at its rear end is lifted, the tilting lever 63 is pivoted around a moving pivot point of guiding pin 64' in second guide slot 35' upwardly until the rear end of panel 4 has reached a lifted position. During this operation third guiding pin 64" is guided in third guide slot 35" in an upward direction into second portion 70', thus initializing the upward movement of the tilting lever 63 rearward of the moving pivot point of guiding pin 64'. First guiding pin 64 is during this operation guided firstly in the horizontal slot portion 68 of first guide slot 35 until secondly it reaches the vertical slot portion 68' in which first guiding pin 64 is guided in a downward direction. Although during the operation of lifting the rear end of the panel 4, first guiding pin 64 and second guiding pin 64' move in their respective guide slots 35, 35', third guiding pin 64" leaves the third guide slot 35" at the upper end of it. Once third guiding pin 64" is out of the third guide slot 35', the movement control and the support of the tilting lever 63 is taken over by the first guiding pin 64 in guide slot 35.

Regarding the vertical movement of the rear end of panel 4 it must be specified in detail that a defined "tilt" position is created in which the panel 4 has a lifted rear end but the front end of the panel 4 is still substantially closed. That means that the front end of panel 4 is still in contact with the seal 38 between the stationary part 7 and panel 4. This particular Tilt position of panel 4 functions as a ventilation position in which the interior of vehicle 1 may be ventilated. Further when the panel 4 is driven from a tilted position to the rear of the roof, firstly the front end of the panel 4 will be lifted in an upward direction and the rear of the panel 4 is lifted somewhat more to a slide position and subsequently panel 4 is being moved to the rear of vehicle 1 thereby opening the roof opening 3.

Accordingly, from the above description it follows that the locking mechanism 62 in the locking position is unlocked from the front mechanism when the second drive member 25 is unlocked via the locking slot 45 from the locking lever 41. And that the locking mechanism 62 locks the tilting mechanism 24 when the third drive member 66 is locked via the locking lever 41 to the locking locator 40. Furthermore, the locking mechanism 62 in a sliding position is locked to the front mechanism 20 when the second drive member 25 is locked via the locking slot 45 to the locking lever 41 and unlocks the tilting mechanism 24 when the third drive member 66 is unlocked via the locking lever 41 from the locking locator 40.

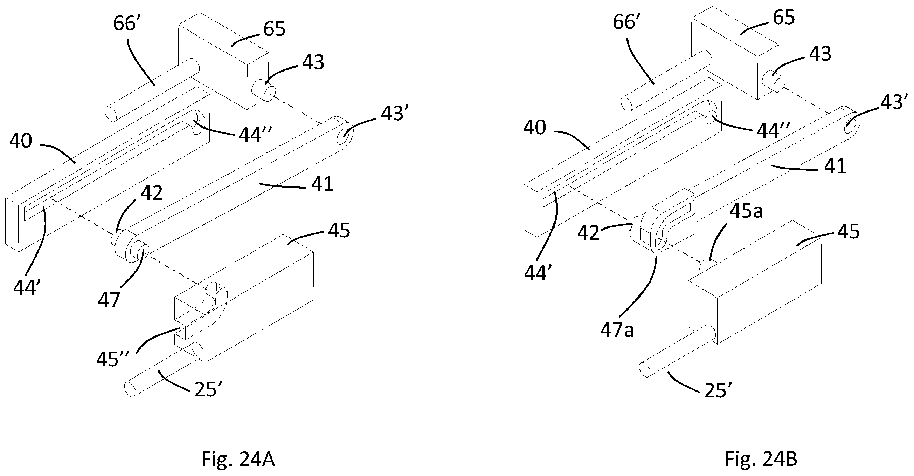

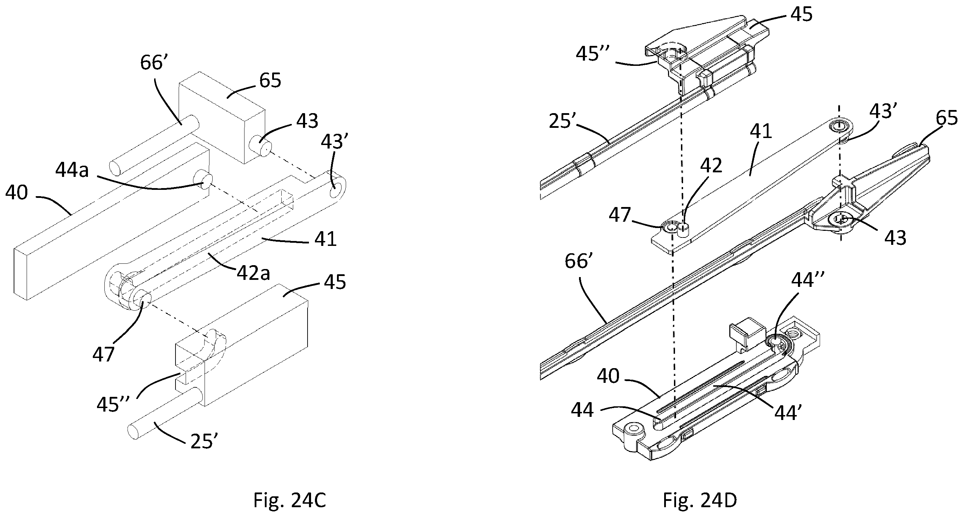

Referring to Figs. 24A-D, alternative embodiments of the locking mechanism 62 are illustrated, where same elements have the same reference numbers. Fig. 24A shows the locking mechanism as described in detail in reference to Figs. 22 and 23. In the embodiment of the locking mechanism of Fig. 24B, the cam 47 and locking slot 45" are replaced by or interchanged as a locking cam 45a and lever slot 47a. Whereas in the embodiment of the locking mechanism of Fig. 24C, the locking pin 42 of the locking lever 41 and pin slot 44 of the locator 40 are replaced by or interchanged as a locator cam 44a and lever slot 42a. As will be understood, alternative variants may be constructed from different combinations of corresponding slots and pins, e.g. also hinge pin 43 of hinge block 65 and connecting hinge hole 43' of locking lever 41 may be interchanged.

In the alternative embodiment of the locking mechanism 62 illustrated in Fig. 24D, the orientation of the locking mechanism and therewith various pins and slots is rotated about 90° degrees in comparison to the embodiments of Figs. 24A-C. Accordingly, in this embodiment the pin slot 44 still comprises two parts, the first part 44' extending in a longitudinal direction and the second part 44" extends perpendicularly to the first part 44', yet in a transverse, cross car direction instead of vertical a direction as in Figs. 24A-C. Similar elements of Figs. 24A-D have the same reference numbers and the description of these Figs. Correspondingly applies. As will be understood, all variants of Figs. 24A-C may be adapted in orientation of the locking mechanism similar to that as in Fig. 24D. Hence, various mutations may be possible. With respect to the embodiment of Fig. 24D, the illustrations of Figs. 22 and 23, may be regarded as a bottom view instead of a side view, wherein the operation of elements is similar. Figs. 22 and 23 may also illustrate a top view of a different rotated embodiment, for example an embodiment mirrored with regard to that of Fig. 24D, such as e.g. one suited to be positioned at an opposing side of the pair of guide rails.

Thus, in general the locking mechanism includes a locking slot mounted at an outer end of the second drive member, a hinge block at an outer end of the third drive member, a locking locator fixedly attached to the guide rail, and a locking lever slidably guided by the locking locator. The locking lever is further pivotally connected at one end to the hinge block and releasably coupled at an opposite end with the locking slot. Accordingly, the locking lever is movable between a sliding position and a tilt locking position via movement of the second drive member. In the sliding position, the locking lever is unlocked in the locking locator and locked in the locking slot, while in the tilt locking position, the locking lever is locked in the locking locator and decoupled from the locking slot. With the locking lever in the tilt locking position, the locking mechanism locks the tilt mechanism to the guide rail. Hence, the locking mechanism is in a locking position. While with the locking lever in the sliding position, the locking mechanism unlocks the tilt mechanism from the guide rail. Hence, the locking mechanism is in a sliding position.

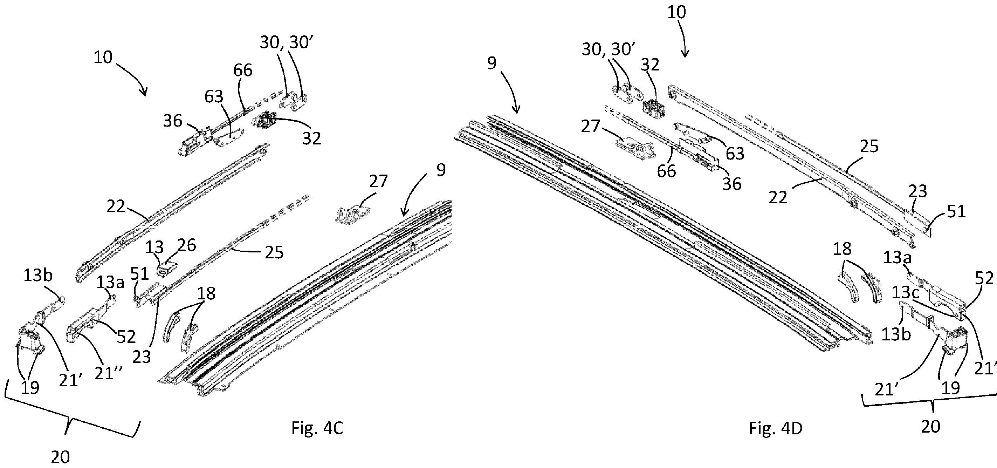

Referring to Figs. 4C and 4D, another embodiment of the operating mechanism 10 is illustrated wherein the front mechanism 20 is constructed alternatively. The tilting mechanism 24 and locking mechanism 62 may be the same as in Figs. 4A and 4B, or be embodied as one of the alternatives as described. In this embodiment, front mechanism 20 includes two front levers 21', 21". A first front lever 21' has slide shoes 19 that cooperate with guide grooves in the guide 9 and inserts 18 as described above. A second front lever 21" has the curve track 52 that cooperates with driving cam 51 of the driving slide 23 that is slidably guided in the guide rail 9'. The first front lever 21' is pivotally connected by means of a pivot hole 13b to a pivot pin 13c of the second front lever 21". The second front lever 21" is pivotally connected by means of a pivot hole 13a to pivot pin 13 of the pivot block 26. In this manner, the first front lever will provide the sliding movement of the panel in and out of the closed position. And the second front lever will provide the vertical lifting or pivoting movement of the panel. Thus, basically, at least one front lever is operatively joined to the front lever, e.g. by a cam-curve joint or slot and pin joint, and pivotally connected to a pivot block. And the front lever is arranged for lifting and pivoting the front edge of the first panel relative to the guide rail by driving of the driving slide, in particular by operating the first drive member. Hence, the overall functionality of the front mechanism 20 and build up is the same for both embodiments, as described throughout the description.

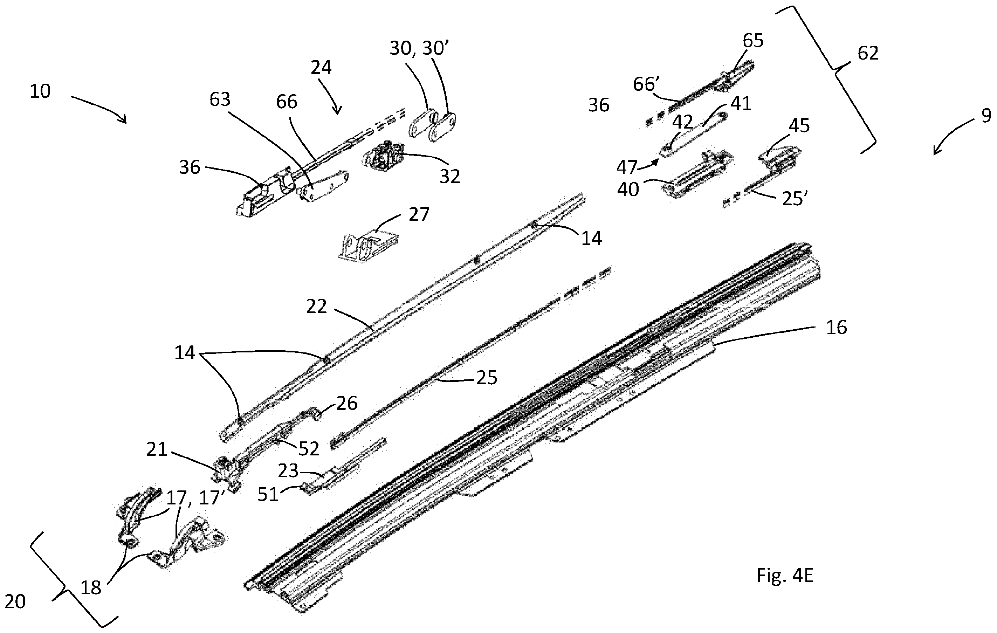

Referring to Fig. 4E, another embodiment of the operating mechanism is illustrated. Similar elements have the same reference numbers as in Figs.4A-D. The tilting mechanism 24 is constructed as described in relation to Figs. 4A-D. In the embodiment of Fig. 4E, the locking mechanism 62 is constructed alternatively in that it is rotated 90° about an axis parallel to the longitudinal direction, as explained above in detail with reference to Fig. 24D. The operation is the same, that is when the second drive member 25 moves rearward, the third drive member 66, 66' is moved along while the locking cam 47 is maintained in the locking slot 45 by the locking pin 45 of the locking lever 41 travelling through the locking locator 40. When the locking pin 45 travels into the perpendicular, transverse portion of the locking locator 40, thereby decoupling the locking cam 47 from the locking slot 45 as it travels into a transverse portion of that locking slot 45, the second drive member 25 may travel further rearwardly while the third drive member remains stationary.

Furthermore, in the embodiment of Fig. 4E, the front mechanism 20 is also constructed alternatively. Instead of a pivot pin 13, the pivot block 26 has an outer curved contour allowing it to pivot over a curved bottom and/or curved top surface. The driving slide 23 connected to the second drive member 25 will be driven by first drive members 12, 12' (see Fig.3), and will operate the front lever 21 via driving cam 51 similarly as explained above.

Referring to Figs. 3 and 12-14, guide rail 9 is provided with a first hole 55. First hole 55 is positioned underneath the tilting mechanism 24 and provides space in vertical direction for the tilting mechanism 24 parts when the panel 4 is in its closed position and the tilting mechanism 24 is folded substantially within the boundaries of the guide rail 9. Due to hole 55, slide claw 32 and housing 27 may be packaged in vertical sense somewhat lower compared to when these parts would have been mounted on top of the guide groove 50.

Referring to Fig. 19, transverse guide rail 8 may be provided with a second hole 56, this second hole 56 would lie beneath locking mechanism 62. In embodiments wherein the transverse guide is mounted below a fixed panel 4', e.g. by gluing, it would be very expensive to remove the glued panel in order to apply service to the locking mechanism 62. To avoid this, the more convenient solution is to use hole 56 for service of the parts of the locking mechanism 62 from below.

Referring to Fig. 20, a section across the roof system is taken along line XX in Fig. 3. In Fig. 20 stationary part 7 is shown to which guide rail 9 is attached and whereby the stationary part 7 is connected to the body flange 5 by means of glue. In this figure the stationary part 7 lies on top of the body flange 5. This is normal with the type of top loaded roofs, which are assembled from the top onto the body. Guide rail 9 has a certain distance relative to the body flange 5 seen in lateral direction.

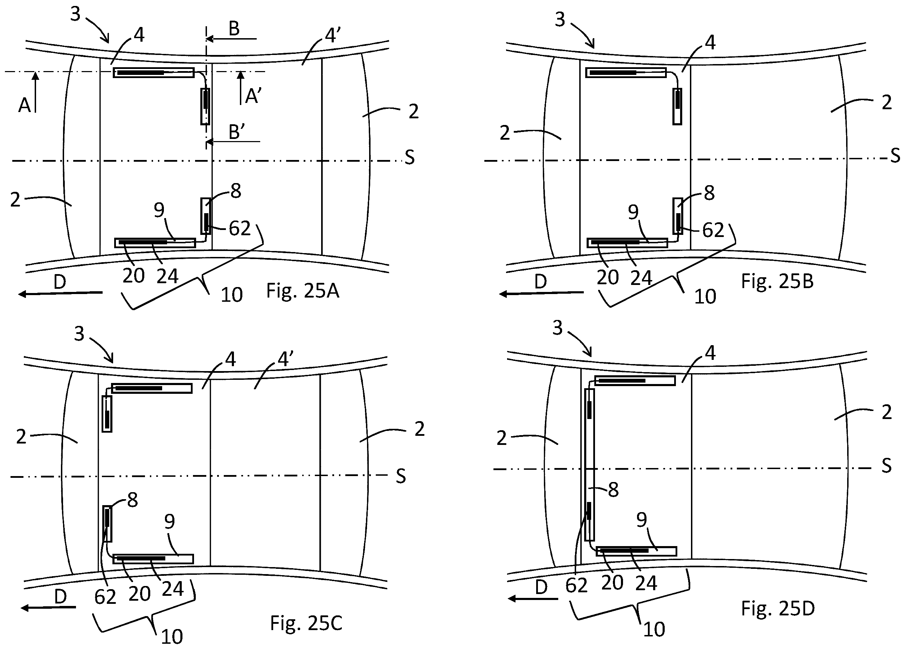

In order to enable embodiments wherein the locking mechanism 62 may be placed in front of or near the front edge the roof opening 3, the second and third drive member may run towards the front of the roof opening. Again, the second drive member may connect the front mechanism and the locking mechanism and the third drive member connects the locking mechanism and the tilting mechanism, with the locking mechanism located at or near the front edge of the roof opening. The elements making up the locking mechanism, that is the locking slot, the locking lever, the locking locator and the hinge block, may be configured such that these will operate to provide the required kinematic movement. In such an embodiment, a rear end of the second drive member may connect to the front of the drive slide and a front end of the second drive member connects to the locking lever via the locking slot. A rear end of the third drive member connects to the front of the tilting lever, while a front end of the third drive member connects to the locking lever via the hinge block. The locking locator and locking lever will provide the required functional connectivity to deliver the operational movement as previously described above. Such arrangements will contribute to enable further variants as will be described in relation to Figs. 25A-26D.

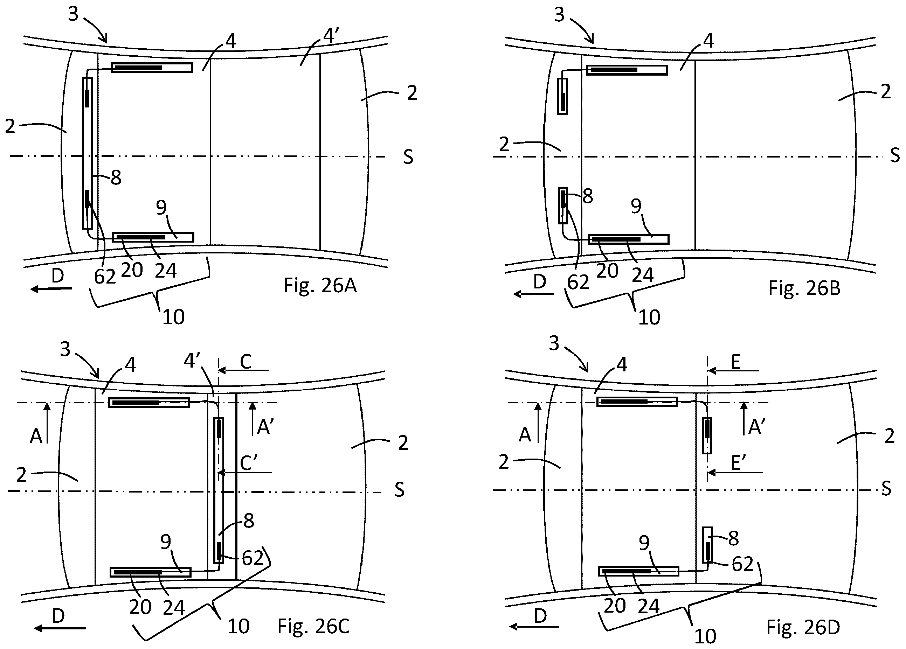

Referring to Figs. 25A-D and 26A-D, plan views of a fixed roof 2 of a vehicle in several embodiments alternative to those of Figs. 2A and 2B are shown. Similar as to Figs. 2A and 2B, herein again schematically indicated are operation mechanism 10, pair of guide rails 9 and transverse guide rail 8, with solid lines for clarity in relation to the surface areas of panels 4, 4'. And the respective location of front mechanism 20, tilting mechanism 24 and locking mechanism 62 are schematically indicated. The pair of guide rails 9 extend in parallel from front to rear on left and right lateral sides of the roof opening 3. The roof system in each roof plan view may display some level of symmetry about symmetry axis S with regard the presence and operation of the various components. Front and rear are in relation to forward direction D. The various embodiments differ in the presence of one single panel 4 or two panels 4, 4'. Whether the transverse guide rail is positioned to the front or the rear. And whether the transverse guide rail 8 consists of a single guide or split in two separate guide portions. The difference between Figs. 25A-D and 26A-D is with regard to whether the operating mechanism 10 is mounted below the movable panel 4, Figs. 25A-D or whether the transverse guide rail is mounted outside of the surface area of the movable panel 4.

In Fig. 25A a fixed roof 2 of a vehicle 1 is shown with a roof system having a first and a second panel 4, 4'. The transverse guide rail 8 is split in two and extends parallel to the rear edge of the roof opening 3. The transverse guide rail 8 is mounted within the surface area of panel 4.

In Fig. 25B a fixed roof 2 of a vehicle 1 is shown with a roof system having a single panel 4. The transverse guide rail 8 is split in two and extends parallel to the rear edge of the roof opening 3. The transverse guide rail 8 is mounted within the surface area of panel 4.

In Fig. 25C a fixed roof 2 of a vehicle 1 is shown with a roof system having a first and a second panel 4, 4'. The transverse guide rail 8 is split in two and extends parallel to the front edge of the roof opening 3. The transverse guide rail 8 is mounted within the surface area of panel 4.

In Fig. 25D a fixed roof 2 of a vehicle 1 is shown with a roof system having a single panel 4. The transverse guide rail 8 as a single element extends parallel to the front edge of the roof opening 3. The transverse guide rail 8 is mounted within the surface area of panel 4.

In Fig. 26A a fixed roof 2 of a vehicle 1 is shown with a roof system having a first and a second panel 4, 4'. The transverse guide rail 8 as a single element extends parallel to the front edge of the roof opening 3. The transverse guide rail 8 is mounted outside the surface area of panel 4, below the roof 2.

In Fig. 26B a fixed roof 2 of a vehicle 1 is shown with a roof system having a single panel 4. The transverse guide rail 8 is split in two and extends parallel to the front edge of the roof opening 3. The transverse guide rail 8 is mounted outside the surface area of panel 4, below the roof 2.

In Fig. 26C a fixed roof 2 of a vehicle 1 is shown with a roof system having a first and a second panel 4, 4'. As shown here, the second, rear panel 4' may be kept slim, e.g. to allow for a modular build in. The transverse guide rail 8 as a single element extends parallel to the rear edge of the roof opening 3. The transverse guide rail 8 is mounted outside the surface area of panel 4, within the surface area of the second panel 4'.

In Fig. 26D a fixed roof 2 of a vehicle 1 is shown with a roof system having a single panel 4. The transverse guide rail 8 is split in two and extends parallel to the rear edge of the roof opening 3. The transverse guide rail 8 is mounted outside the surface area of panel 4, below the roof 2.

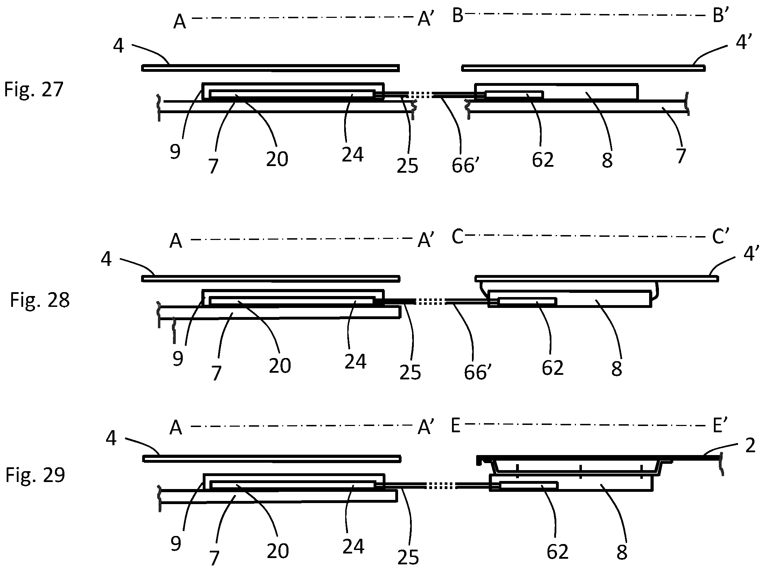

Referring to Fig. 27, a cross section along lines A-A' and B-B' as in Fig. 25A is shown. Referring to Fig. 28, a cross section along lines A-A' and C-C' as in Fig. 26C is shown. Referring to Fig. 29, a cross section along lines A-A' and E-E' as in Fig. 26D is shown. In these Figs., each of the corresponding segments A-A' and B-B', A-A' and C-C', A-A' and E-E' are indicated again. The guide rail 9 is mounted on the stationary part 7. The front mechanism 20 and tilting mechanism 24 are supported by the guide rail 9. Second drive member 25 and third drive member 66' connect the front and tilting mechanism respectively to the locking mechanism 62 which is supported by transverse guide rail 8.

In Fig. 27 the transverse guide rail is mounted to a portion of the stationary part 7', whereas in Fig. 28 it is mounted to an inner portion of the second panel 4'. In Fig. 29 the transverse guide rail 8 is mounted to an inner portion of the fixed roof 2. As may be understood, these various ways of mounting the transverse guide rail 8 may be applied to the other embodiments of Figs. 25AD and 26A-D where appropriate.

Throughout the description, all of the parts of the operating mechanism and the various embodiments of the guide rails are drawn up in the respective figures and are described in this document mostly on one, left or right, side of the roof system. It will be understood that the roof system is equipped with left and right operating mechanisms 10 and left and right guide rails which are mirror imaged to each other.

With regard to the second and drive members that will run in and out of the parallel guide rails, the transverse guide rail 8 may include further guide channels. Such guide channels may be formed within the transverse guide itself, e.g. by extrusion, and/or they may include tubes or gutters. In particular, any distance and corner between parallel guide rail 9 and transverse guide rail 8 may include a cable tube or drive gutter. Referring to Figs.2A and 3, the transverse guide rail includes, for each of the parallel guide rails 9, a first guide channel 71 for guiding the second drive member 25 of the respective parallel guide rail.9. And, for each of the parallel guide rails 9, a second guide channel 72 for guiding the third drive member 66 of the respective parallel guide rail 9. Where convenient, guide channels 71, 72 may be formed as integral parts. In particular, when the transverse guide rail is embodied as a single element second guide channels 72 for both of the third drive members 66 may be provided as an integral single guide channel. Similarly, the first guide channels 71 for the respective second drive members are formed as an integral single guide channel. The length of the guide channels required for guiding the third drive members will be less than that required for guiding the second drive members, as once the tilting mechanism is locked the third drive members will travel no further while the second drive members may continue until a fully opened position of the first panel is reached. In this manner, the number of separate, individual guide channels in the transverse guide rails may be reduced.

Still referring to Fig. 3, each guide channel may further include a cornering guide channel section 71', 72' for each parallel guide rail 9. Where the cornering guide channel sections 71', 72' are configured for allowing the second drive members 25 and/or third drive members 66 extend around a corner into the respective guide channel 71, 72.

As will be clear from the embodiments illustrated in Figs. 25A-D and 26A-D, the at least one transverse guide rail 8 may be positioned near a front end of the parallel guides. Or the at least one transverse guide rail 8 may be positioned near a rear end of the parallel guides 9. Or the at least one transverse guide rail may be positioned rearward and remote from a rear end of the parallel guides (9). Or the at least one transverse guide rail may be positioned remote from both the front and rear end of the parallel guides (9). In the latter situation, the at least one transverse guide rail 8 may be close to or within the trunk, a luggage compartment or another concealed compartment. In yet other embodiments, the at least one transverse guide rail 8 may be supported by the stationary part 7 and positioned underneath the first panel. Or it may be positioned underneath the second panel 4' or another portion of the roof panel 2, either in front of rear of the roof opening 3.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Roof system for a vehicle (1) having a fixed roof (2) with a roof opening (3), comprising:
a stationary part (7) configured to be attached to the fixed roof (2);
at least a first panel (4) movably supported on the stationary part (7) and configured to close the roof opening (3) in a closed position and to be moved at least rearwardly to an opened position in which the roof opening (3) is at least partly opened, the first panel having a front edge and a rear edge;
a pair of parallel_guide rails (9) supported by the stationary part (7) and extending in longitudinal direction substantially parallel to opposite lateral sides of the roof opening (3); at least one transverse guide rail (8) extending in a direction at an angle to the pair of parallel guide rails (9); and
at least one operating mechanism (10) for each one of the parallel guide rails (9) for operating the first panel (4), wherein each respective operating mechanism comprises:
a front mechanism (20), capable of moving in the guide rail (9) in a longitudinal direction, and capable of moving the front edge of the first panel (4) in a vertical direction, the front mechanism (20) including a panel bracket (22) attached to the first panel (4);
a tilting mechanism (24), capable of moving the rear edge of the first panel (4) in a vertical direction, the tilting mechanism (24) including a slide claw (32) in slidable contact with the panel bracket (22);
a locking mechanism (62) for locking the tilting mechanism (24) to the guide rail (9) in order to keep the tilting mechanism (24) stationary to the guide rail (9) to enable the first panel (4) to slide with respect to the kept stationary tilting mechanism (24); and
the parallel guide rails (9) each slidably supporting the front mechanism (20) and the tilting mechanism (24) of the respective operating mechanism (10);
the at least one transverse guide rail (8) slidably supporting the locking mechanism (62) of each respective operating mechanism (10).

2. Roof system according to claim 1, the operating mechanism (10) further comprising:
a first drive member (12, 12') operatively connecting the front mechanism (20) to a drive motor (11);
a second drive member (25 operatively connecting the front mechanism (20) to the locking mechanism (62); and
a third drive member (66) operatively connecting the locking mechanism (62) to the tilting mechanism (24).

3. Roof system according to claim 1 or 2, wherein:
the at least one transverse guide rail (8) is positioned near a front end of the parallel guides; or
the at least one transverse guide rail (8) is positioned near a rear end of the parallel guides (9); or
the at least one transverse guide rail (8) is positioned rearward and remote from a rear end of the parallel guides (9); or
the at least one transverse guide rail (8) is positioned remote from both the front and rear end of the parallel guides (9);

4. Roof system according to any of the preceding claims, wherein the at least one transverse guide rail is supported by the stationary part (7); and
wherein the at least one transverse guide rail (8) is positioned underneath the first panel (4).

5. Roof system according to any of the preceding claims, further comprising at least a second panel supported on the stationary part (7);
wherein the first panel (4) is configured to close a first part of the roof opening (3) in the closed position; and
wherein the at least one second panel (4') is configured to close a second part of the roof opening (3); and
wherein the at least transverse guide rail (8) is positioned underneath the second panel.

6. Roof system according to any of the preceding claims, wherein the operating mechanism (10) is configured:
to slide the front mechanism (20) out of the closed position towards an opened position, and to simultaneously slide the locking mechanism (62) via the second drive member (25) towards and into a locking position;
to slide the tilting mechanism (24) out of the closed position into a tilted position;
to slide and lock, when the locking mechanism (62) is in the locking position, the tilting mechanism (24) via the third drive member (66) while the tilting mechanism (24) is in the tilted position; and
to slide the front mechanism (20into the opened position while the tilting mechanism (24) is in the locked position.

7. Roof system according to any of the preceding claims, wherein the operating mechanism (10) is configured:
to slide the front mechanism (20) out of the opened position towards the closed position while the tilting mechanism (24) is in the locked position;
to slide the locking mechanism (62) via the second drive member (25) out of the locking position;
to unlock and, when the locking mechanism (62) is out of the locking position, slide the tilting mechanism (24) towards the closed position via the third drive member (66) while the tilting mechanism (24) is in the tilted position;
to slide the tilting mechanism (24) out of the tilted position into the closed position; and
to slide the front mechanism (20) into the closed position.

8. Roof system according to any of the preceding claims, the locking mechanism comprising:
a locking slot (45) at an outer end of the second drive member (25);
a hinge block (65) at an outer end of the third drive member (66, 66');
a locking locator (40) fixedly attached to the guide rail (9); and
a locking lever (41) slidably guided by the locking locator (40), pivotally connected at one end to the hinge block (65), and releasably coupled at an opposite end with the locking slot (45);
wherein the locking lever is movable between a sliding position and a tilt locking position via movement of the second drive member (25);
wherein in the sliding position, the locking lever is unlocked in the locking locator (40) and locked in the locking slot (45);
wherein in the tilt locking position, the locking lever (41) is locked in the locking locator (40) and decoupled from the locking slot (45).

9. Roof system according to any of the preceding claims,
wherein the locking mechanism (62) in the locking position is unlocked from the front mechanism when the second drive member (25) is unlocked from the locking lever (41) and locks the tilting mechanism when the third drive member (66) is locked via the locking lever (41) to the locking locator (40); and
wherein the locking mechanism (62) in a sliding position is locked to the front mechanism (20) when the second drive member (25) is locked to the locking lever (41) and unlocks the tilting mechanism when the third drive member (66) is unlocked via the locking lever (41) from the locking locator (40).

10. Roof system according to any of the preceding claims, wherein the front mechanism (20) comprises:
a driving slide (23) slidably supported by the guide rial (9) and operatively connected to first drive member (12) for driving the driving slide (23);
a pivot block (26) slidably supported by the guide rail (9); and
at least one front lever (21, 21', 21") operatively joined to the driving slide (23) by a cam-curve joint (51, 52) and pivotally connected to the pivot block (26); and
wherein the at least one front lever (21, 21', 21") is arranged for lifting and pivoting the front edge of the first panel (4) relative to the guide rail (9) by driving of the driving slide (23).

11. Roof system according to any of the preceding claims, wherein the tilting mechanism (24) comprises:
a sliding guide (36) slidably guided in the guide rail (9, 60) capable of moving one end of a tilting lever (63) in a substantially vertical direction; and
wherein the tilting lever (63) at one end is pivotally connected to the slide claw (32) or to lifting levers (30, 30'), for moving the slide claw (32) in a vertical direction.

12. Roof system according to any of the preceding claims, the transverse guide rail (8) comprising:
for each of the parallel guide rails (9), a first guide channel (71) for guiding the second drive member (25, 25') of the respective parallel guide rail (9);
for each of the parallel guide rails (9), a second guide channel (72) for guiding the third drive member (66, 66') of the respective parallel guide rail (9).

13. Roof system according to any of the preceding claims, wherein the first guide channels (71) for the respective drive members are formed as an integral single guide channel.

14. Roof system according to any of the preceding claims, wherein the second guide channels (72) for the respective drive members are formed as an integral single guide channel.

15. Roof system according to any of the preceding claims, each guide channel further comprising:
for each parallel guide rail (9) a cornering guide channel section (71', 72'), configured for allowing the second drive members (25, 25') and/or third drive members (66, 66') extend around a corner into the respective guide channel (71, 72).

## Patentansprüche

1. Dachsystem für ein Fahrzeug (1), das ein Festdach (2) mit einer Dachöffnung (3) hat, aufweisend:
einen stationären Teil (7), der konfiguriert ist, um an dem Festdach (2) angebracht zu sein,
wenigstens eine erste Platte (4), die an dem stationären Teil (7) bewegbar gehalten ist und konfiguriert ist, um die Dachöffnung (3) in einer geschlossen-Position zu verschließen und um zumindest nach hinten in eine geöffnet-Position bewegt zu werden, in der die Dachöffnung (3) zumindest teilweise geöffnet ist, wobei die erste Platte einen vorderen Rand und einen hinteren Rand hat,
ein Paar paralleler Führungsschienen (9), die von dem stationären Teil (7) gehalten sind und sich in Längsrichtung im Wesentlichen parallel zu gegenüberliegenden seitlichen Seiten der Dachöffnung (3) erstrecken,
wenigstens eine Querführungsschiene (8), die sich in einer Richtung in einem Winkel zu dem Paar paralleler Führungsschienen (9) erstreckt, und
wenigstens einen Betätigungsmechanismus (10) für jede der parallelen Führungsschienen (9) zum Betätigen der ersten Platte (4), wobei jeder jeweilige Betätigungsmechanismus aufweist:
einen vorderen Mechanismus (20), der imstande ist, sich in der Führungsschiene (9) in Längsrichtung zu bewegen, und der imstande ist, den vorderen Rand der ersten Platte (4) in Vertikalrichtung zu bewegen, wobei der vordere Mechanismus (20) eine Plattenhalterung (22) aufweist, die an der ersten Platte (4) angebracht ist,
einen Kippmechanismus (24), der imstande ist, den hinteren Rand der ersten Platte (4) in Vertikalrichtung zu bewegen, wobei der Kippmechanismus (24) eine Verschiebeklaue (32) aufweist, die mit der Plattenhalterung (22) in Verschiebekontakt steht,
einen Verriegelungsmechanismus (62) zum Verriegeln des Kippmechanismus (24) an der Führungsschiene (9), um den Kippmechanismus (24) gegenüber der Führungsschiene (9) stationär zu halten, um der ersten Platte (4) zu ermöglichen, sich bezüglich des stationär gehaltenen Kippmechanismus (24) zu verschieben, wobei
die parallelen Führungsschienen (9) jeweils den vorderen Mechanismus (20) und den Kippmechanismus (24) des jeweiligen Betätigungsmechanismus (10) verschiebbar halten, wobei
die mindestens eine Querführungsschiene (8) den Verriegelungsmechanismus (62) jedes jeweiligen Betätigungsmechanismus (10) verschiebbar hält.

2. Dachsystem gemäß Anspruch 1, wobei der Betätigungsmechanismus (10) ferner aufweist:
ein erstes Antriebselement (12, 12'), das den vorderen Mechanismus (20) mit einem Antriebsmotor (11) betriebsverbindet,
ein zweites Antriebselement (25), das den vorderen Mechanismus (20) mit dem Verriegelungsmechanismus (62) betriebsverbindet, und
ein drittes Antriebselement (66), das den Verriegelungsmechanismus (62) mit dem Kippmechanismus (24) betriebsverbindet.

3. Dachsystem gemäß Anspruch 1 oder 2, wobei:
die mindestens eine Querführungsschiene (8) in der Nähe eines vorderen Endes der parallelen Führungen positioniert ist, oder
die mindestens eine Querführungsschiene (8) in der Nähe eines hinteren Endes der parallelen Führungen (9) positioniert ist, oder
die mindestens eine Querführungsschiene (8) hinter und entfernt von einem hinteren Ende der parallelen Führungen (9) positioniert ist, oder
die mindestens eine Querführungsschiene (8) von sowohl dem vorderen als auch dem hinteren Ende der parallelen Führungen (9) entfernt positioniert ist.

4. Dachsystem gemäß irgendeinem der vorstehenden Ansprüche,
wobei die mindestens eine Querführungsschiene von dem stationären Teil (7) gehalten wird, und
wobei die mindestens eine Querführungsschiene (8) unterhalb der ersten Platte (4) positioniert ist.

5. Dachsystem gemäß irgendeinem der vorstehenden Ansprüche, ferner aufweisend wenigstens eine zweite Platte, die an dem stationären Teil (7) gehalten ist,
wobei die erste Platte (4) konfiguriert ist, um einen ersten Teil der Dachöffnung (3) in der geschlossen-Position zu verschließen, und
wobei die mindestens eine zweite Platte (4') konfiguriert ist, um einen zweiten Teil der Dachöffnung (3) zu verschließen, und
wobei die mindestens eine Querführungsschiene (8) unterhalb der zweiten Platte positioniert ist.

6. Dachsystem gemäß irgendeinem der vorstehenden Ansprüche, wobei der Betätigungsmechanismus (10) konfiguriert ist:
um den vorderen Mechanismus (20) aus der geschlossen-Position zu einer geöffnet-Position hin zu verschieben, und um zugleich den Verriegelungsmechanismus (62) via das zweite Antriebselement (25) zu und in einer/eine verriegelt-Position zu verschieben,
um den Kippmechanismus (24) aus der geschlossen-Position in eine gekippt-Position zu verschieben,
um, wenn der Verriegelungsmechanismus (62) in der Verriegelungsposition ist, den Kippmechanismus (24) via das dritte Antriebselement (66) zu verschieben und zu verriegeln, während der Kippmechanismus (24) in der gekippt-Position ist, und
um den vorderen Mechanismus (20) in die geöffnet-Position zu verschieben, während der Kippmechanismus (24) in der verriegelt-Position ist.

7. Dachsystem gemäß irgendeinem der vorstehenden Ansprüche, wobei der Betätigungsmechanismus (10) konfiguriert ist:
um den vorderen Mechanismus (20) aus der geöffnet-Position zu der geschlossen-Position hin zu verschieben, während der Kippmechanismus (24) in der verriegelt-Position ist,
um den Verriegelungsmechanismus (62) via das zweite Antriebselement (25) aus der verriegelt-Position heraus zu verschieben,
um den Kippmechanismus (24) zu entriegeln und, wenn der Verriegelungsmechanismus (62) aus der verriegelt-Position heraus ist, via das dritte Antriebselement (66) zu der geschlossen-Position hin zu verschieben, während der Kippmechanismus (24) in der gekippt-Position ist,
den Kippmechanismus (24) aus der gekippt-Position in die geschlossen-Position zu verschieben, und
den vorderen Mechanismus (20) in die geschlossen-Position zu verschieben.

8. Dachsystem gemäß irgendeinem der vorstehenden Ansprüche, wobei der Verriegelungsmechanismus aufweist:
einen Verriegelungsschlitz (45) an einem äußeren Ende des zweiten Antriebselements (25),
einen Scharnierblock (65) an einem äußeren Ende des dritten Antriebselements (66, 66'),
einen Verriegelungspositionshalter (40), der fest an der Führungsschiene (9) angebracht ist, und
einen Verriegelungshebel (41), der vom Verriegelungspositionshalter (40) verschiebbar geführt ist, an einem Ende schwenkbar mit dem Scharnierblock (65) verbunden ist und an einem gegenüberliegenden Ende mit dem Verriegelungsschlitz (45) lösbar gekuppelt ist,
wobei der Verriegelungshebel via Bewegung des zweiten Antriebselements (25) zwischen einer Verschiebeposition und einer Kippverriegelungsposition bewegbar ist,
wobei in der Verschiebeposition der Verriegelungshebel im Verriegelungspositionshalter (40) entriegelt und im Verriegelungsschlitz (45) verriegelt ist,
wobei in der Kippverriegelungsposition der Verriegelungshebel (41) im Verriegelungspositionshalter (40) verriegelt und vom Verriegelungsschlitz (45) entkuppelt ist.

9. Dachsystem gemäß irgendeinem der vorstehenden Ansprüche,
wobei der Verriegelungsmechanismus (62) in der Verriegelungsposition vom vorderen Mechanismus entriegelt ist, wenn das zweite Antriebselement (25) vom Verriegelungshebel (41) entriegelt ist, und den Kippmechanismus verriegelt, wenn das dritte Antriebselement (66) via den Verriegelungshebel (41) am Verriegelungspositionshalter (40) verriegelt ist, und
wobei der Verriegelungsmechanismus (62) in einer Verschiebeposition am vorderen Mechanismus (20) verriegelt ist, wenn das zweite Antriebselement (25) am Verriegelungshebel (41) verriegelt ist, und den Kippmechanismus entriegelt, wenn das dritte Antriebselement (66) via den Verriegelungshebel (41) vom Verriegelungspositionshalter (40) entriegelt ist.

10. Dachsystem gemäß irgendeinem der vorstehenden Ansprüche, wobei der vordere Mechanismus (20) aufweist:
einen Antriebsschieber (23), der von der Führungsschiene (9) verschiebbar gehalten ist und mit dem ersten Antriebselement (12) betriebsverbunden ist zum Antreiben des Antriebsschiebers (23),
einen Schwenkblock (26), der von der Führungsschiene (9) verschiebbar gehalten ist, und
wenigstens einen vorderen Hebel (21, 21', 21"), der mit dem Antriebsschieber (23) durch eine Vorsprung-Kurven-Verbindung (51, 52) betriebsverbunden ist und mit dem Schwenkblock (26) schwenkbar verbunden ist, und
wobei der wenigstens eine vordere Hebel (21, 21', 21") angeordnet ist zum Anheben und Schwenken des vorderen Rands der ersten Platte (4) relativ zur Führungsschiene (9) durch Antreiben des Antriebsschiebers (23) .

11. Dachsystem gemäß irgendeinem der vorstehenden Ansprüche, wobei der Kippmechanismus (24) aufweist:
eine Verschiebeführung (36), die in der Führungsschiene (9, 60) verschiebbar geführt ist und imstande ist, ein Ende eines Kipphebels (63) in einer im Wesentlichen vertikalen Richtung zu bewegen, und
wobei der Kipphebel (63) an einem Ende mit der Verschiebeklaue (32) oder mit Hebehebeln (30, 30') schwenkbar verbunden ist zum Bewegen der Verschiebeklaue in Vertikalrichtung.

12. Dachsystem gemäß irgendeinem der vorstehenden Ansprüche, wobei die Querführungsschiene (8) aufweist:
für jede der parallelen Führungsschienen (9) einen ersten Führungskanal (71) zum Führen des zweiten Antriebselements (25, 25') der jeweiligen parallelen Führungsschiene (9),
für jede der parallelen Führungsschienen (9) einen zweiten Führungskanal (72) zum Führen des dritten Antriebselements (66, 66') der jeweiligen parallelen Führungsschiene (9).

13. Dachsystem gemäß irgendeinem der vorstehenden Ansprüche, wobei die ersten Führungskanäle (71) für die jeweiligen Antriebselemente als ein integraler einzelner Führungskanal ausgebildet sind.

14. Dachsystem gemäß irgendeinem der vorstehenden Ansprüche, wobei die zweiten Führungskanäle (72) für die jeweiligen Antriebselemente als ein integraler einzelner Führungskanal ausgebildet sind.

15. Dachsystem gemäß irgendeinem der vorstehenden Ansprüche, wobei jeder Führungskanal ferner aufweist:
für jede parallele Führungsschiene (9) einen Eckkurvenführungskanalabschnitt (71', 72'), der konfiguriert ist, um es den zweiten Antriebselementen (25, 25') und/oder dritten Antriebselementen (66, 66') zu ermöglichen, sich um eine Ecke in den jeweiligen Führungskanal (71, 72) zu erstrecken.

## Revendications

1. Système de toit pour un véhicule (1) ayant un toit fixe (2) avec une ouverture de toit (3), comprenant :
une partie immobile (7) configurée pour être attachée au toit fixe (2) ;
au moins un premier panneau (4) supporté de manière mobile sur la partie immobile (7) et configuré pour fermer l'ouverture de toit (3) dans une position fermée et pour être déplacé au moins vers l'arrière dans une position ouverte dans laquelle l'ouverture de toit (3) est au moins partiellement ouverte, le premier panneau présentant un bord avant et un bord arrière ;
une paire de rails de guidage parallèles (9) supportés par la partie immobile (7) et s'étendant dans la direction longitudinale sensiblement parallèlement à des côtés latéraux opposés de l'ouverture de toit (3) ; au moins un rail de guidage transversal (8) s'étendant dans une direction à un angle par rapport à la paire de rails de guidage parallèles (9) ; et
au moins un mécanisme d'actionnement (10) pour chacun des rails de guidage parallèles (9) pour l'actionnement du premier panneau (4), dans lequel chaque mécanisme d'actionnement respectif comprend :
un mécanisme avant (20), apte à se déplacer dans le rail de guidage (9) dans une direction longitudinale, et apte à déplacer le bord avant du premier panneau (4) dans une direction verticale, le mécanisme avant (20) comportant un support de panneau (22) attaché au premier panneau (4) ;
un mécanisme d'inclinaison (24), apte à déplacer le bord arrière du premier panneau (4) dans une direction verticale, le mécanisme d'inclinaison (24) comportant une griffe coulissante (32) en contact coulissant avec le support de panneau (22) ;
un mécanisme de verrouillage (62) pour verrouiller le mécanisme d'inclinaison (24) sur le rail de guidage (9) afin de maintenir le mécanisme d'inclinaison (24) immobile par rapport au rail de guidage (9) pour permettre au premier panneau (4) de coulisser par rapport au mécanisme d'inclinaison (24) maintenu immobile ; et
les rails de guidage parallèles (9) supportant chacun de manière coulissante le mécanisme avant (20) et le mécanisme d'inclinaison (24) du mécanisme d'actionnement (10) respectif ;
l'au moins un rail de guidage transversal (8) supportant de manière coulissante le mécanisme de verrouillage (62) de chaque mécanisme d'actionnement (10) respectif.

2. Système de toit selon la revendication 1, le mécanisme d'actionnement (10) comprenant en outre :
un premier organe d'entraînement (12, 12') reliant de manière opérationnelle le mécanisme avant (20) à un moteur d'entraînement (11) ;
un deuxième organe d'entraînement (25) reliant de manière opérationnelle le mécanisme avant (20) au mécanisme de verrouillage (62) ; et
un troisième organe d'entraînement (66) reliant de manière opérationnelle le mécanisme de verrouillage (62) au mécanisme d'inclinaison (24).

3. Système de toit selon la revendication 1 ou 2, dans lequel :
l'au moins un rail de guidage transversal (8) est positionné près d'une extrémité avant des guides parallèles ; ou
l'au moins un rail de guidage transversal (8) est positionné près d'une extrémité arrière des guides parallèles (9) ; ou
l'au moins un rail de guidage transversal (8) est positionné vers l'arrière et à distance d'une extrémité arrière des guides parallèles (9) ; ou
l'au moins un rail de guidage transversal (8) est positionné à distance à la fois de l'extrémité avant et arrière des guides parallèles (9) ;

4. Système de toit selon l'une quelconque des revendications précédentes, dans lequel l'au moins un rail de guidage transversal est supporté par la partie immobile (7) ; et
dans lequel l'au moins un rail de guidage transversal (8) est positionné sous le premier panneau (4).

5. Système de toit selon l'une quelconque des revendications précédentes, comprenant en outre au moins un deuxième panneau supporté sur la partie immobile (7) ;
dans lequel le premier panneau (4) est configuré pour fermer une première partie de l'ouverture de toit (3) dans la position fermée ; et
dans lequel l'au moins un deuxième panneau (4') est configuré pour fermer une deuxième partie de l'ouverture de toit (3) ; et
dans lequel l'au moins rail de guidage transversal (8) est positionné sous le deuxième panneau.

6. Système de toit selon l'une quelconque des revendications précédentes, dans lequel le mécanisme d'actionnement (10) est configuré :
pour faire coulisser le mécanisme avant (20) hors de la position fermée vers une position ouverte, et pour faire coulisser simultanément le mécanisme de verrouillage (62) via le deuxième organe d'entraînement (25) vers et dans une position de verrouillage ;
pour faire coulisser le mécanisme d'inclinaison (24) hors de la position fermée dans une position inclinée ;
pour faire coulisser et verrouiller, lorsque le mécanisme de verrouillage (62) est dans la position de verrouillage, le mécanisme d'inclinaison (24) via le troisième organe d'entraînement (66) tandis que le mécanisme d'inclinaison (24) est dans la position inclinée ; et
pour faire coulisser le mécanisme avant (20dans la position ouverte tandis que le mécanisme d'inclinaison (24) est dans la position verrouillée.

7. Système de toit selon l'une quelconque des revendications précédentes, dans lequel le mécanisme d'actionnement (10) est configuré :
pour faire coulisser le mécanisme avant (20) hors de la position ouverte vers la position fermée tandis que le mécanisme d'inclinaison (24) est dans la position verrouillée ;
pour faire coulisser le mécanisme de verrouillage (62) via le deuxième organe d'entraînement (25) hors de la position de verrouillage ;
pour déverrouiller et, lorsque le mécanisme de verrouillage (62) est hors de la position de verrouillage, faire coulisser le mécanisme d'inclinaison (24) vers la position fermée via le troisième organe d'entraînement (66) tandis que le mécanisme d'inclinaison (24) est dans la position inclinée ;
pour faire coulisser le mécanisme d'inclinaison (24) hors de la position inclinée dans la position fermée ; et
pour faire coulisser le mécanisme avant (20) dans la position fermée.

8. Système de toit selon l'une quelconque des revendications précédentes, le mécanisme de verrouillage comprenant :
une fente de verrouillage (45) à une extrémité extérieur du deuxième organe d'entraînement (25) ;
un bloc charnière (65) à une extrémité extérieure du troisième organe d'entraînement (66, 66') ;
un localisateur de verrouillage (40) attaché de manière fixe au rail de guidage (9) ; et
un levier de verrouillage (41) guidé de manière coulissante par le localisateur de verrouillage (40), relié de manière pivotante à une extrémité au bloc charnière (65), et couplé de manière détachable à une extrémité opposée à la fente de verrouillage (45) ;
dans lequel le levier de verrouillage est mobile entre une position coulissante et une position de verrouillage d'inclinaison par déplacement du deuxième organe d'entraînement (25) ;
dans lequel, dans la position coulissante, le levier de verrouillage est déverrouillé dans le localisateur de verrouillage (40) et verrouillé dans la fente de verrouillage (45) ;
dans lequel, dans la position de verrouillage d'inclinaison, le levier de verrouillage (41) est verrouillé dans le localisateur de verrouillage (40) et découplé de la fente de verrouillage (45).

9. Système de toit selon l'une quelconque des revendications précédentes,
dans lequel le mécanisme de verrouillage (62) dans la position de verrouillage est déverrouillé du mécanisme avant lorsque le deuxième organe d'entraînement (25) est déverrouillé du levier de verrouillage (41) et verrouille le mécanisme d'inclinaison lorsque le troisième organe d'entraînement (66) est verrouillé sur le localisateur de verrouillage (40) via le levier de verrouillage (41) ; et
dans lequel le mécanisme de verrouillage (62) dans une position coulissante est verrouillé sur le mécanisme avant (20) lorsque le deuxième organe d'entraînement (25) est verrouillé sur le levier de verrouillage (41) et déverrouille le mécanisme d'inclinaison lorsque le troisième organe d'entraînement (66) est déverrouillé du localisateur de verrouillage (40) via le levier de verrouillage (41).

10. Système de toit selon l'une quelconque des revendications précédentes, dans lequel le mécanisme avant (20) comprend :
un coulisseau d'entraînement (23) supporté de manière coulissante par le rail de guidage (9) et relié de manière opérationnelle au premier organe d'entraînement (12) pour entraîner le coulisseau d'entraînement (23) ;
un bloc pivot (26) supporté de manière coulissante par le rail de guidage (9) ; et
au moins un levier avant (21, 21', 21") relié de manière opérationnelle au coulisseau d'entraînement (23) par un joint à came incurvée (51, 52) et relié de manière pivotante au bloc pivot (26) ; et
dans lequel l'au moins un levier avant (21, 21', 21") est agencé pour soulever et faire pivoter le bord avant du premier panneau (4) par rapport au rail de guidage (9) en entraînant le coulisseau d'entraînement (23).

11. Système de toit selon l'une quelconque des revendications précédentes, dans lequel le mécanisme d'inclinaison (24) comprend :
un guide coulissant (36) guidé de manière coulissante dans le rail de guidage (9, 60) apte à déplacer une extrémité d'un levier d'inclinaison (63) dans une direction sensiblement verticale ; et
dans lequel le levier d'inclinaison (63) à une extrémité est relié de manière pivotante à la griffe coulissante (32) ou aux leviers de levage (30, 30'), pour déplacer la griffe coulissante (32) dans une direction verticale.

12. Système de toit selon l'une quelconque des revendications précédentes, le rail de guidage transversal (8) comprenant :
pour chacun des rails de guidage parallèles (9), un premier canal de guidage (71) pour guider le deuxième organe d'entraînement (25, 25') du rail de guidage parallèle (9) respectif ;
pour chacun des rails de guidage parallèles (9), un deuxième canal de guidage (72) pour guider le troisième organe d'entraînement (66, 66') du rail de guidage parallèle (9) respectif.

13. Système de toit selon l'une quelconque des revendications précédentes, dans lequel les premiers canaux de guidage (71) pour les organes d'entraînement respectifs sont formés en tant que canal de guidage unique intégral.

14. Système de toit selon l'une quelconque des revendications précédentes, dans lequel les deuxièmes canaux de guidage (72) pour les organes d'entraînement respectifs sont formés en tant que canal de guidage unique intégral.

15. Système de toit selon l'une quelconque des revendications précédentes, chaque canal de guidage comprenant en outre :
pour chaque rail de guidage parallèle (9), une section de canal de guidage en coin (71', 72'), configurée pour permettre aux deuxièmes organes d'entraînement (25, 25') et/ou aux troisièmes organes d'entraînement (66, 66') de s'étendre autour d'un coin dans le canal de guidage (71, 72) respectif.
